# EUROPÄISCHE PATENTSCHRIFT

(11) **EP 2 763 923 B1**
(45) Veröffentlichungstag und Bekanntmachung des Hinweises auf die Patenterteilung: **24.07.2019**
(21) Anmeldenummer: 12775598.1
(22) Anmeldetag: 27.09.2012
(51) Int. Cl.: B65H 43/00, B65H 39/02, B65H 29/00, B65H 31/24, B65H 39/055, B65H 39/065, B65H 39/075

(54) **COMPUTERISIERTE STEUERVORRICHTUNG SOWIE COMPUTERIMPLEMENTIERTES VERFAHREN ZUR STEUERUNG EINER PRODUKTVERARBEITUNGSANLAGE, UND COMPUTERPROGRAMMPRODUKT**
COMPUTERISED CONTROL DEVICE AND COMPUTER-IMPLEMENTED METHOD FOR CONTROLLING A PRODUCT PROCESSING PLANT, AND COMPUTER PROGRAM PRODUCT
DISPOSITIF DE COMMANDE INFORMATISÉ, PROCÉDÉ MIS EN OEUVRE SUR ORDINATEUR POUR LA COMMANDE D'UNE INSTALLATION DE TRAITEMENT DE PRODUITS ET PRODUIT-PROGRAMME INFORMATIQUE

(30) Priorität: 06.10.2011 CH 16372011
(43) Veröffentlichungstag der Anmeldung: 13.08.2014
(73) Patentinhaber: FERAG AG, 8340 Hinwil (CH)
(72) Erfinder: GROTH, Uwe, CH-8342 Wernetshausen (CH); CORVO, Maurizio, CH-8610 Uster (CH)
(74) Vertreter: IPrime Rentsch Kaelin AG
(86) Internationale Anmeldenummer: PCT/CH2012/000223
(87) Internationale Veröffentlichungsnummer: WO 2013/049945

(56) Entgegenhaltungen:
- WO-A1-2011/069269
- US-A- 4 552 349

## Beschreibung

### Technisches Gebiet

Die vorliegende Erfindung betrifft eine computerisierte Steuervorrichtung und ein computerimplementiertes Verfahren zur Steuerung einer Produktverarbeitungsanlage. Die vorliegende Erfindung betrifft insbesondere eine computerisierte Steuervorrichtung und ein computerimplementiertes Verfahren zur Steuerung einer Produktverarbeitungsanlage, insbesondere eine Druckproduktverarbeitungsanlage, welche eine Sammelanlage mit einem Förderer und mehreren Zuförderern zur Erstellung von Produktkollektionen aus von den Zuförderern zugeführten flächigen Produkten, insbesondere Druckprodukte, umfasst.

### Stand der Technik

Bei bekannten Sammelanlagen zum Sammeln (im weiteren Sinne) von Produktkollektionen aus mehreren Produkten durch Zusammentragen, Einstecken oder Sammeln (im engeren Sinne), werden die verschiedenen Produkte von mehreren seriell angeordneten Zuförderern sequentiell einem Förderer zugeführt, wo sie zusammengetragen, eingesteckt oder gesammelt werden, beispielsweise auf respektive in Kollektionsträgern wie Greifern, siehe z.B. WO 2011/069269 A1. Bei Druckproduktverarbeitungsanlagen umfassen die Produkte insbesondere flächige Druckprodukte unterschiedlicher Dicke aber auch andere flächige Produkte, wie beispielsweise Datenträger oder andere Beilagen. Die aus den Produkten erstellten Produktkollektionen werden vom Förderer sequentiell einem oder mehreren Weiterverarbeitungsanlagen zugeführt, beispielsweise zum Einstecken, Folieren, Heften, Kleben, Schneiden und/oder Stapeln. Typischerweise, ist eine zum Zusammentragen von Produkten eingerichtete Sammelanlage mit einem umlaufenden Förderer ausgeführt. Ein umlaufender Förderer ermöglicht den Transport von Produkten, Produktkollektionen respektive Kollektionsträgern entlang einer geschlossenen Kurve bzw. Bahn zyklisch an den produktzuführenden Zuförderern vorbei. Somit können bestimmte Produkte respektive Produktkollektionen mehrere Zyklen auf dem umlaufenden Förderer durchführen, so dass sie dem Prozess des Zusammentragens mehrfach zugeführt werden, bevor sie einer Weiterverarbeitungsanlagen übergeben werden. Zur Auslieferung, beispielsweise mittels Lastkraftwagen oder anderen Transportfahrzeugen, werden die Produktkollektionen durch Stapelstationen zu Paketen gestapelt und anschliessend umreift. Für eine Auslieferungsroute sind in der Regel mehrere Produktionssequenzen für jeweils eine Kollektionssorte notwendig. Die Zuförderer müssen vor und während der Produktion durch Bedienpersonal der Produktverarbeitungsanlage manuell mit den zuzuführenden Produkten belegt werden. Die Produkte werden dazu typischerweise auf Paletten zu den Zuförderern herangeführt und vom Bedienpersonal stapel- oder bündelweise von einer Palette dem betreffenden Zuförderer zugeführt. Bei Produktverarbeitungsanlagen mit einer grossen Anzahl von Zuförderern, beispielsweise mehrere Dutzend oder über hundert, und einer darauf auszuführenden Produktion zur Erstellung mehrerer verschiedenartigen Produktkollektionen aus einer gegebenenfalls noch grösseren Anzahl von verschiedenen zuzuführenden Produkten, beispielsweise über hundert oder mehrere hundert verschiedene Beilagen, für mehrere Auslieferungsrouten mit jeweils mehreren Produktkollektionen unterschiedlicher Kollektionssorte, wird die Produktionszeit beträchtlich verlängert, wenn Neubelegungen von Zuförderern während der Produktion zu Produktionsunterbrüchen führen. Diese Rüstzeiten bei den Zuförderern können zu beachtlichen Verzögerungen der vorgesehenen Auslieferungszeitpunkten beitragen.

### Darstellung der Erfindung

Es ist eine Aufgabe der vorliegenden Erfindung eine computerisierte Steuervorrichtung und ein computerimplementiertes Verfahren zur Steuerung einer Produktverarbeitungsanlage mit Sammelanlage vorzuschlagen, insbesondere eine Druckproduktverarbeitungsanlage, welche zumindest einige Nachteile der bekannten Systeme nicht aufweisen. Es ist insbesondere eine Aufgabe der vorliegenden Erfindung eine computerisierte Steuervorrichtung und ein computerimplementiertes Verfahren zur Steuerung einer Produktverarbeitungsanlage mit Sammelanlage vorzuschlagen, welche ein verbessertes Belegen von Zuförderern der Sammelanlage ermöglichen um eine hohe Nettoleistung der Produktverarbeitungsanlage zu erzielen.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zur Steuerung einer Produktverarbeitungsanlage, insbesondere eine Druckproduktverarbeitungsanlage, welche eine Sammelanlage mit einem Förderer und einer Vielzahl von Zuförderern zur Erstellung von Produktkollektionen aus von den Zuförderern zugeführten flächigen, flexiblen Produkten verschiedener Art umfasst, eine Produktionskonfiguration erfasst wird, welche eine Produktion von mehreren Produktionssequenzen für mehrere Auslieferungsrouten definiert, wobei jeder Auslieferungsroute eine oder mehrere Produktionssequenzen zugeordnet sind, die jeweils eine Produktion von mehreren Produktkollektionen einer mehrere Produkte umfassenden Kollektionssorte definieren, dass jeweils für die Zuförderer eine Belegung mit Produkten bestimmt wird, die vom Zuförderer zur Erstellung der Produktkollektionen dem Förderer zuzufördern sind, dass ein Produktionsoptimierungsparameter entgegengenommen wird, der bestimmt, ob für die Auslieferungsrouten eine definierte Produktionsreihenfolge einzuhalten ist oder ob die Produktionsreihenfolge der Auslieferungsrouten veränderbar ist, dass bei veränderbarer Produktionsreihenfolge die Produktionssequenzen mehrerer Auslieferungsrouten für die Produktion von Produktionskollektionen der selben Kollektionssorte zu einer zusammenhängenden Produktionssequenz zusammengefasst werden, und dass die Belegung der Zuförderer für die Produktionsreihenfolge mit zusammengefassten Produktionssequenzen bestimmt wird.

In einer Ausführungsvariante werden Produktionsoptimierungsparameter entgegengenommen, die bestimmen, dass für eine oder mehrere der Auslieferungsrouten ein definierter Produktionszeitpunkt einzuhalten ist und dass die Produktionsreihenfolge für die verbleibenden Auslieferungsrouten der Produktion veränderbar ist. Die Produktionssequenzen der veränderbaren Auslieferungsrouten werden für die Produktion von Produktionskollektionen der selben Kollektionssorte zu einer zusammenhängenden Produktionssequenz zusammengefasst und die Belegung der Zuförderer wird für die Produktionsreihenfolge mit teilweise unveränderten und teilweise zusammengefassten Produktionssequenzen bestimmt.

In einer Ausführungsvariante wird eine bei einem Wechsel der Kollektionssorte, von einer zusammengefassten Produktionssequenz zur nachfolgenden zusammengefassten Produktionssequenz, erwartete Zeitdauer für Produktwechsel bei Zuförderern und/oder Produktionsunterbruch der Sammelanlage bestimmt, und die Reihenfolge der zusammengefassten Produktionssequenzen wird so bestimmt, dass die für Produktwechsel und Produktionsunterbruch insgesamt erwartete Zeitdauer möglichst gering ist.

In einer Ausführungsvariante wird die Belegung der Zuförderer für eine definierte Produktionsreihenfolge so bestimmt, dass die Produkte jeweils einem der Zuförderer zugeordnet werden, wobei Produkte, die einer gemeinsamen Kollektionssorte angehören nicht dem selben Zuförderer zugeordnet werden, und Produkte, die in aufeinanderfolgenden Produktionssequenzen vorhanden sind, falls möglich, nicht dem selben Zuförderer zugeordnet werden.

In einer Ausführungsvariante wird die Belegung der Zuförderer für eine festgelegte Produktionsreihenfolge so bestimmt, dass die Produkte jeweils einem der Zuförderer zugeordnet werden, wobei Produkte, die einer gemeinsamen Kollektionssorte angehören nicht dem selben Zuförderer zugeordnet werden. Für Produkte, die in aufeinanderfolgenden Produktionssequenzen vorhanden sind, wird eine erwartete Zeitdauer für Produktwechsel bei Zuförderern und/oder Produktionsunterbruch der Sammelanlage bestimmt und die Belegung der Zuförderer wird so bestimmt, dass die für Produktwechsel und Produktionsunterbruch insgesamt erwartete Zeitdauer möglichst gering ist.

In einer Ausführungsvariante wird ein Produktionsoptimierungsparameter entgegengenommen, der angibt, ob eine gleichzeitige Belegung mehrerer Zuförderer mit dem selben Produkt zulässig ist oder nicht, und die Belegung der Zuförderer wird unter Berücksichtigung der Möglichkeit gleichzeitiger Belegung bestimmt.

In einer Ausführungsvariante wird ein Produktionsoptimierungsparameter entgegengenommen, der eine Anzahl Ladestationen bestimmt, welche eine parallele Beladung für mehrere Auslieferungsrouten ermöglichen, und die Belegung der Zuförderer wird unter Berücksichtigung der Anzahl Ladestationen bestimmt.

In einer Ausführungsvariante werden geänderte Produktionsbedingungen während der Produktion erfasst und die Belegung der Zuförderer wird während der Produktion unter Berücksichtigung der geänderten Produktionsbedingungen bestimmt.

In einer Ausführungsvariante wird die Anzahl der erforderlichen Zuförderer auf einer Benutzerschnittstelle dargestellt sowie umgestellte Produktionssequenzen werden entgegengenommen und die Belegung der Zuförderer wird unter Berücksichtigung der umgestellten Produktionssequenzen bestimmt.

Neben einer computerisierten Steuervorrichtung und einem computerimplementierten Verfahren zur Steuerung einer Produktverarbeitungsanlage bezieht sich die vorliegende Erfindung überdies auf ein Computerprogrammprodukt, das ein greifbares, computerlesbares Speichermedium mit gespeichertem Computercode umfasst. Der Computercode ist eingerichtet, einen oder mehrere Prozessoren der Steuervorrichtung so zu steuern, dass die Prozessoren respektive die Steuervorrichtung ein Verfahren zur Steuerung einer Produktverarbeitungsanlage, insbesondere einer Druckproduktverarbeitungsanlage ausführen, welche eine Sammelanlage mit einem Förderer und einer Vielzahl von Zuförderern zur Erstellung von Produktkollektionen aus von den Zuförderern zugeführten flächigen, flexiblen Produkten verschiedener Art umfasst. Dabei erfasst die Steuervorrichtung eine Produktionskonfiguration, welche eine Produktion von mehreren Produktionssequenzen für mehrere Auslieferungsrouten definiert, wobei jeder Auslieferungsroute eine oder mehrere Produktionssequenzen zugeordnet sind, die jeweils eine Produktion von mehreren Produktkollektionen einer mehrere Produkte umfassenden Kollektionssorte definieren. Die Steuervorrichtung bestimmt jeweils für die Zuförderer eine Belegung mit Produkten, die vom Zuförderer zur Erstellung der Produktkollektionen dem Förderer zuzufördern sind. Die Steuervorrichtung nimmt einen Produktionsoptimierungsparameter entgegen, der bestimmt, ob für die Auslieferungsrouten eine definierte Produktionsreihenfolge einzuhalten ist oder ob die Produktionsreihenfolge der Auslieferungsrouten veränderbar ist. Bei veränderbarer Produktionsreihenfolge fasst die Steuervorrichtung die Produktionssequenzen mehrerer Auslieferungsrouten für die Produktion von Produktionskollektionen der selben Kollektionssorte zu einer zusammenhängenden Produktionssequenz zusammen und bestimmt die Belegung der Zuförderer für die Produktionsreihenfolge mit zusammengefassten Produktionssequenzen.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1:: zeigt ein Blockdiagramm einer schematisch dargestellten computergesteuerten Produktverarbeitungsanlage, welche eine Sammelanlage mit einem Förderer und mehreren Zuförderern zum Erstellen von Produktkollektionen und mehrere nachgeschaltete Stapel- und Ladestationen umfasst.
- Figur 2:: zeigt ein Blockdiagramm einer schematisch dargestellten weiteren computergesteuerten Produktverarbeitungsanlage, welche eine Sammelanlage mit einem Förderer und mehreren Zuförderern zum Erstellen von Produktkollektionen umfasst.
- Figur 3:: zeigt ein Flussdiagramm, welches ein Beispiel einer Sequenz von Schritten zur Steuerung einer Produktverarbeitungsanlage mit einer optimierten Belegung der Zuförderer zur Erstellung von Produktkollektionen illustriert.
- Figur 4:: zeigt ein Flussdiagramm, welches ein Beispiel einer Sequenz von Schritten zur Steuerung einer Produktverarbeitungsanlage mit einer gemäss Produktionsoptimierungsparametern optimierten Belegung der Zuförderer zur Erstellung von Produktkollektionen illustriert.
- Figur 5:: zeigt ein Flussdiagramm, welches ein Beispiel einer Sequenz von Schritten zur Steuerung einer Produktverarbeitungsanlage mit einer optimierten Produktionsreihenfolge der Produktionssequenzen illustriert.
- Figur 6:: zeigt ein Flussdiagramm, welches ein Beispiel einer Sequenz von Schritten zur Steuerung einer Produktverarbeitungsanlage mit einer optimierten Belegung der Zuförderer bei definierter Produktionsreihenfolge der Produktionssequenzen illustriert.
- Figur 7:: zeigt eine Tabelle einer Produktionsreihenfolge mit einer Zuordnung von Produktionssequenzen zu Auslieferungsrouten.
- Figur 8:: zeigt eine Tabelle einer Produktionsreihenfolge mit einer Zuordnung von Produktionssequenzen zu Auslieferungsrouten, wobei Produktionssequenzen für Produktkollektionen der gleichen Kollektionssorte routenübergreifend zusammengefasst sind.
- Figur 9:: zeigt eine Tabelle mit einem Belegungsplan, welcher für aufeinanderfolgende Produktionssequenzen die Belegung der Zuförderer mit verschiedenen Produkten illustriert.
- Figur 10:: zeigt eine Darstellung mit der Anzahl Zuförderer, welche während einer Produktionssequenz erforderlich sind.

### Wege zur Ausführung der Erfindung

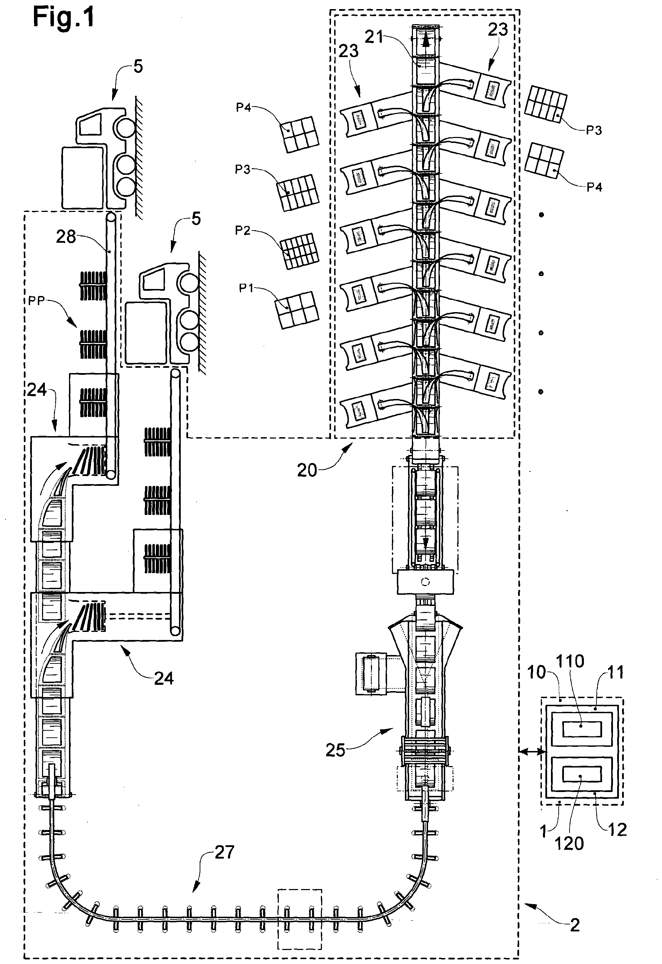

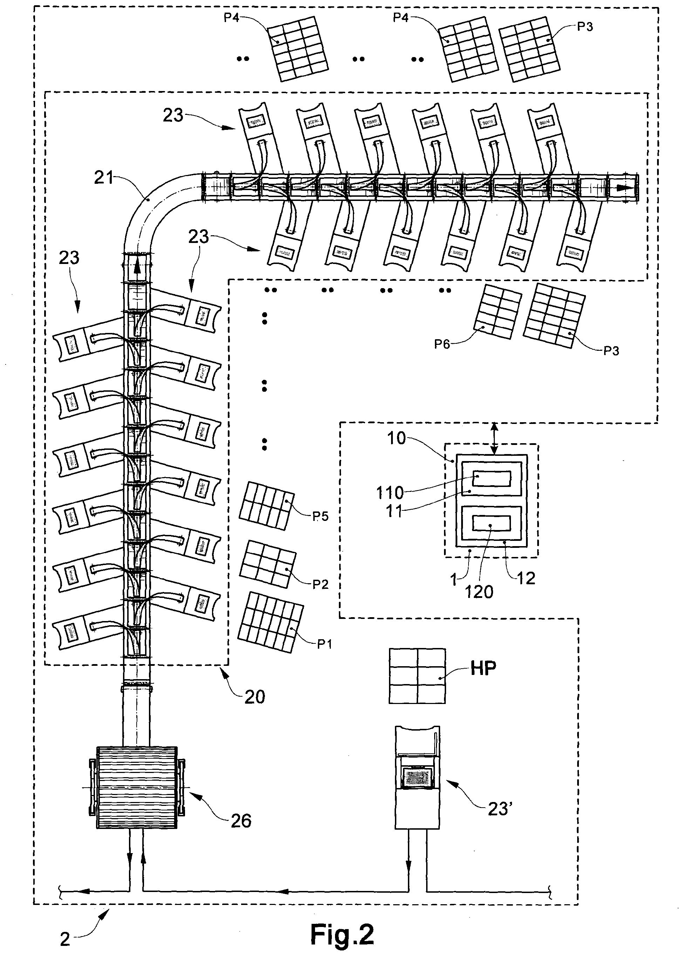

In den Figuren 1 und 2 bezieht sich das Bezugszeichen 2 auf eine computergesteuerte Produktverarbeitungsanlage mit einer Sammelanlage 20, insbesondere eine Druckproduktverarbeitungsanlage. Die Sammelanlage 20 umfasst mindestens einen Förderer 21 und eine Vielzahl von Zuförderern 23, welche dem Förderer 21 abhängig von ihrer Produktbelegung jeweils unterschiedliche Produkte P1, P2, P3, P4, P5, P6 (P1-P6) zuführen. Die Produkte P1-P6 umfassen Druckprodukte und/oder andere flächige, flexible Produkte wie Datenträger, z.B. CDs, DVDs, Warenmuster, z.B. Beutelsuppen oder Teebeutel, Briefpost, verpackte Textilien, flexible Anzeigen, etc. Die Sammelanlage 20 umfasst beispielsweise mehrere Dutzend oder über hundert Zuförderer 23. Je nach Anwendung sind mehrere Zuförderer 23 mit dem gleichen Produkt belegt (Splitbetrieb), beispielsweise bei dicken Produkten P3, P4, wo die manuelle Bestückung eines einzelnen Zuförderers 23 durch Bedienpersonal der Produktverarbeitungsanlage 2 zu langsam ist, um die pausenlose Zuführung von Produkten P1-P6 zum Förderer 21 durch einen einzigen Zuförderer 23 abzudecken (unterbruchsfreie Produktion), oder als Backup, um allfällige Ausfälle von Zuförderern 23 auszugleichen (maximale Produktionssicherheit). Typischerweise ist die Anzahl unterschiedlicher Produkte P1-P6, die während einer Produktion für die Erstellung verschiedener Produktkollektionen zugeführt werden sollen, grösser als die Anzahl der Zuförderer 23 der Produktverarbeitungsanlage 2.

In verschiedenen Ausführungsvarianten ist die Sammelanlage 20 eingerichtet durch Zusammentragen, Einstecken oder Sammeln von Produkten oder durch andere produktzusammenführende Operationen Zusammenführungen von Produkten zu erstellen, die hier als Produktkollektionen bezeichnet werden, und umfasst entsprechend einen Förderer 21 mit einer Zusammentragstrecke mit umlaufenden Fördermitteln, eine Sammeltrommel, einen Bandförderer zum Zusammentragen von Schuppenströmen oder eine Sammelstrecke, jeweils mit oder ohne Kollektionsträger.

Die Beispiele der in den Figuren 1 und 2 dargestellten Sammelanlagen 20 umfassen jeweils einen Förderer 21 mit mehreren seriell angeordneten Kollektionsträgern, beispielsweise Greifer, Sockel, Taschen, Fächer, Abteile, Klammern oder Sättel, welche entlang einer geschlossenen Linie zyklisch an den Zuförderern 23 vorbeigeführt werden und die zugeführten Produkte P1-P6 aufnehmen. Durch die sequentielle Zuführung der Produkte P1-P6 wird auf dem Förderer 21, insbesondere auf respektive in den Kollektionsträgern, eine Produktkollektion zusammengestellt.

Wie in den Figuren 1 und 2 schematisch dargestellt ist, umfasst die Produktverarbeitungsanlage 2 in verschiedenen Ausführungsvarianten eine oder mehrere Weiterverarbeitungsanlagen, die beispielsweise über eine Übergabeeinheit der Sammelanlage 20 nachgeschaltet ist. Solche Weiterverarbeitungsanlagen umfassen beispielsweise eine oder mehrere Stapelstationen 24, eine Verpackungsanlage 25, z.B. eine Folieranlage, eine Anlage 26 zum Einstecken von zusätzlichen Produkten P1-P6 oder Produktkollektionen in ein Hauptprodukt HP von einem entsprechenden Zuförderer 23', beispielsweise eine rotierende Einstecktrommel, eine Anlage zum Heften und/oder Schneiden, eine Anlage zum Kleben und/oder Schneiden, und/oder eine Anlage zum Aufdrucken oder Aufkleben von Zusatzinformationen wie beispielsweise Namen und Adresse.

Die vollständig zusammengestellten und gegebenenfalls weiter bearbeiteten Produktkollektionen werden, beispielsweise wie in Figur 1 illustriert, über einen weiteren Förderer 27, beispielsweise ein Kettenförderer mit Greifern, einer von beispielsweise mehreren Stapelstation 24 zugeführt, welche ein Paket PP mit einer definierten Anzahl Produktkollektionen erstellt und für den Abtransport einem wegführenden Förderer 28 zuführt, beispielsweise ein Bandförderer, welcher das Paket zur Auslieferung entsprechend einer geplanten Route, eine Auslieferungsroute, einem zugeordneten Lastkraftwagen 5 zuführt. Es ist auch möglich anstatt Pakete PP zu erstellen, die erstellten Produktkollektionen aufzuwickeln. Der wegführende Förderer 28 ist in einer Variante als Puffer ausgestaltet, der als Zwischenspeicher für erstellte Produktkollektionen dient, oder es sind andere und/oder zusätzliche Puffer als Zwischenspeicher zwischen der Produktverarbeitungsanlage 2 und den ausliefernden Lastkraftwagen 5 vorgesehen.

Zur Steuerung umfasst die Produktverarbeitungsanlage 2 einen Steuercomputer 10, der mit den verschiedenen Komponenten und Einheiten der Produktverarbeitungsanlage 2 über Kommunikationsverbindungen verbunden ist, insbesondere mit der Sammelanlage 20, dem Förderer 21, den zuführenden Zuförderern 23 und allfälligen Weiterverarbeitungsanlagen, steuerbaren Übergabeeinheiten und/oder Makulaturweichen, Stapelstationen 24, weiteren Förderern 27, 28 und verschiedenen Sensoren, Zählern und Aktoren der Produktverarbeitungsanlage 2.

Das Bezugszeichen 1 bezieht sich auf eine computerisierte Steuervorrichtung, welche als Teil des Steuercomputers 10 oder auf einem oder mehreren separaten, mit dem Steuercomputer 10 verbundenen Computer ausgeführt ist. Die Steuervorrichtung 1 ist mittels Kommunikationsverbindungen direkt oder über den Steuercomputer 10 indirekt mit den Komponenten und Einheiten der Produktverarbeitungsanlage 2 verbunden, insbesondere mit den zuführenden Zuförderern 23. Wie in den Figuren 1 und 2 schematisch dargestellt ist, umfasst die Steuervorrichtung 1 mehrere Funktionsmodule, insbesondere ein Steuermodul 11 und ein Produktionsmodul 12, deren Funktionen später detailliert beschrieben werden, sowie Datenspeicher respektive Programmspeicher zur Speicherung von Belegungsdaten 110 und Produktionskonfigurationsdaten 120.

Die Produktionskonfigurationsdaten 120 umfassen Anlagekonfigurationsparameter, Produktionsoptimierungsparameter und Produktionskonfigurationen, welche mindestens eine Produktion von mehreren Produktionssequenzen für - in der Regel - mehrere Auslieferungsrouten definieren.

Die Anlagekonfigurationsparameter definieren anlagespezifische Konfigurationen der Produktverarbeitungsanlage 2 für die Produktion, beispielsweise die Anzahl betriebsbereiter Zuförderer 23, die Produktionsgeschwindigkeit (z.B. 27'000 Takte/h) und die erwartete/durchschnittliche zeitliche Dauer eines Produktionsunterbruchs, beispielsweise1-5 Minuten.

Eine Produktionskonfiguration umfasst produktionsspezifische Angaben wie die Anzahl als Beilagen zu verwendenden Produkte P1-P6 (z.B. 60), die Anzahl zu verarbeitenden Ausgaben d.h. Hauptprodukte HP (z.B. 5), die Anzahl Auslieferungsrouten (z.B. 126), die insgesamte Anzahl Exemplare d.h. zu produzierende Produktkollektionen (z.B. 58'000) und die Anzahl Kollektionssorten (z.B. 78). Für die einzelnen Produkte P1-P6 sind Produktdaten gespeichert, die beispielsweise das Format, d.h. die geometrischen Abmessungen und die Ausrichtung, und das Gewicht eines Produkts respektive Produkttyps beschreiben und zudem Produktbilddaten mit Titelbild und/oder Bildausschnitten umfassen.

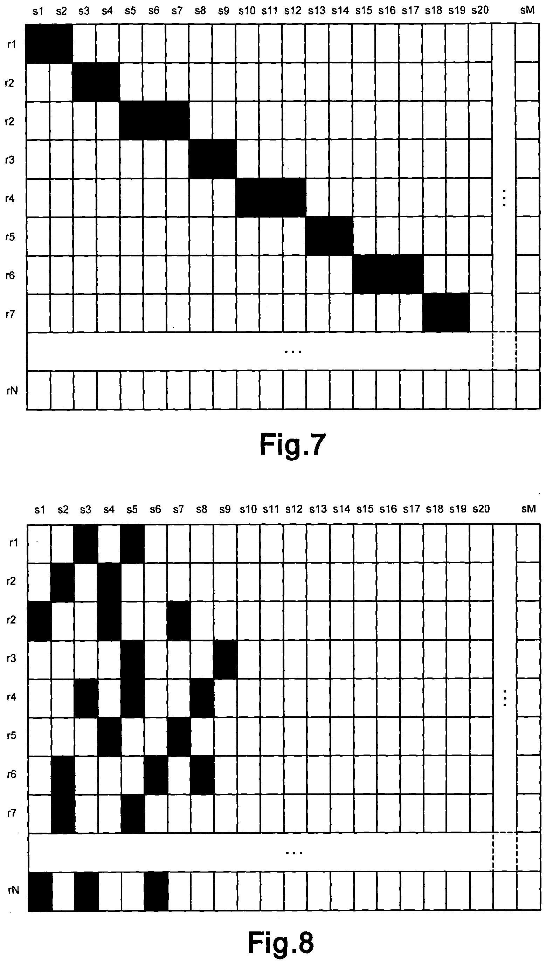

Wie in den Figuren 7 und 8 beispielhaft dargestellt ist, sind gemäss einer Produktionskonfiguration jeder Auslieferungsroute r1, r2, r3, r4, r5, r6, r7, rN (r1-rN) jeweils eine oder mehrere Produktionssequenzen s1, s2, s3, s4, s5, s6, s7, s8, s9, s10, s11, s12, s13, s14, s15, s17, s18, s19, s20, sM (s1-sM) zugeordnet, wobei jede Produktionssequenz s1-sM eine definierte Anzahl von Produktkollektionen einer bestimmten Kollektionssorte definiert respektive erzeugt. Die Kollektionssorte einer Produktkollektion ist durch die Produkte P1-P6 bestimmt, die in der betreffenden Produktkollektion enthalten sind, wobei je nach Anwendung die Reihenfolge der Produkte P1-P6 in einer Produktkollektion fest definiert oder flexibel variierbar ist. Eine Produktionskonfiguration weist eine definierte Produktionsreihenfolge der Produktionssequenzen auf. Zumindest in der anfänglich definierten Grundkonfiguration der Produktion ist die Produktionsreihenfolge so definiert, dass die Abfolge der Produktionssequenzen, wie in der Figur 7 beispielhaft illustriert ist, durch die Reihenfolge der Auslieferungsrouten r1-rN definiert ist, wobei auch für die Abfolge der Produktionssequenzen s1-sM einer Auslieferungsroute r1-rN jeweils eine routenspezifische Reihenfolge bestimmt ist. Typischerweise werden Produktkollektionen der selben Kollektionssorte jedoch nicht nur in einer sondern in mehreren verschiedenen Routen ausgeliefert, so dass bei einer routendefinierten Produktionsreihenfolge bedeutend mehr Produktionssequenzen (z.B. 198) notwendig sind, als die Anzahl unterschiedlicher Kollektionssorten (z.B. 78), die zu produzieren sind.

Die Produktionsoptimierungsparameter umfassen einen Sequenzkonsolidierungsparameter, einen Splitbetriebparameter, einen Umsortierungsparameter und einen Parallelbeladungsparameter.

Der Sequenzkonsolidierungsparameter gibt an, ob die routenabhängige Produktionsreihenfolge eingehalten werden soll oder ob sie dadurch verändert werden kann, dass Produktionssequenzen für Produktkollektionen der selben Kollektionssorte in einer übergeordneten, zusammenhängenden Sequenz zusammengefasst werden. Je nach Ausführungsvariante bestimmt der Sequenzkonsolidierungsparameter die Flexibilität der Produktionsreihenfolge für die gesamte Produktion, z.B. die Produktion einer oder mehrerer Ausgaben einer Zeitung, oder ist auf mehrere aufeinanderfolgende Auslieferungsrouten beschränkt, wobei gewisse Auslieferungsrouten unverändert bleiben müssen, beispielsweise an einen bestimmten Produktions- oder Auslieferungszeitpunkt gebunden.

Der Splitbetriebparameter gibt an, ob ein Splitbetrieb der Zuförderer 23 zulässig ist oder nicht, das heisst, ob mehrere Zuförderer 23 gleichzeitig mit dem selben Produkt P1-P6 belegt werden dürfen oder nicht.

Der Umsortierungsparameter gibt an, ob eine Veränderung der Reihenfolge der zusammengefassten Sequenzen einer Kollektionssorte zulässig ist oder nicht, das heisst, ob die Reihenfolge der Kollektionssorten umgeordnet werden darf.

Der Parallelbeladungsparameter gibt an, ob und gegebenenfalls wie viele parallele Laderespektive Stapelstationen 24 gleichzeitig zur Verfügung stehen.

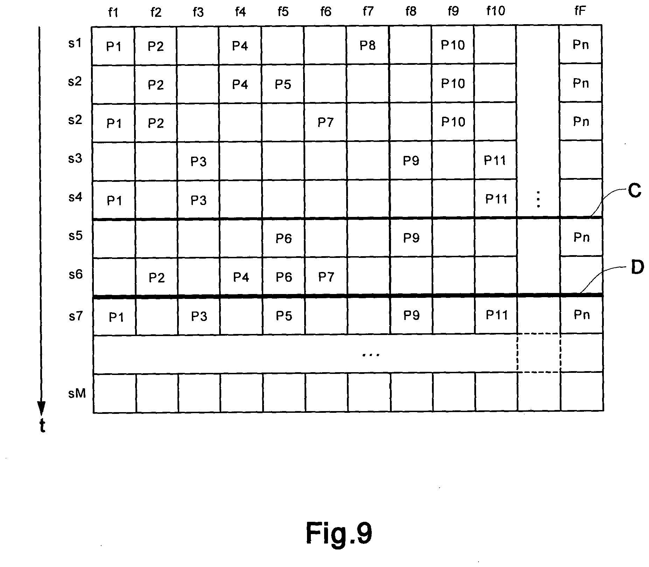

Wie in der Figur 9 beispielhaft dargestellt ist, definieren die Belegungsdaten 110 für die einzelnen Produktionssequenzen s1-sM jeweils die Belegung der Zuförderer f1, f2, f3, f4, f5, f6, f8, f9, f10, fF (f1-fF) mit den Produkten P1, P2, P3, P4, P5, P6, P7, P8, P9, P10, P11, Pn (P1-Pn) der betreffenden Kollektionssorte. Bei einer definierten sequentiellen Abfolge der Produktionssequenzen s1-sM definieren die Belegungsdaten die zeitliche Reihenfolge t der Belegung der einzelnen Zuförderer 23, f1-fF. Die Markierungslinie C in der Figur 9 zeigt einen notwendigen Wechsel der Belegung des Zuförderers f5 ausgehend vom Produkt P5 für die Produktionssequenz s2 zum Produkt P6 für die Produktionssequenz s5 an. Die Markierungslinie D in der Figur 9 zeigt einen notwendigen Wechsel der Belegung des Zuförderers f5 ausgehend vom Produkt P6 für die Produktionssequenz s6 zum Produkt P5 für die Produktionssequenz s7 an, der zwischen unmittelbar aufeinander folgenden Produktionsschritten der Produktionssequenz s6 respektive s7 erfolgt und damit einen Betriebsunterbruch bedingt.

Die Steuervorrichtung 1 und/oder der Steuercomputer 10 sind vorzugsweise mit einem übergeordneten, nicht dargestellten computerisierten Leitsystem verbunden.

Die Funktionsmodule der Steuervorrichtung 1 respektive des Steuercomputers 10, insbesondere das Steuermodul 11 und das Produktionsmodul 12, sind vorzugsweise als programmierte Softwaremodule ausgeführt, welche Computerprogrammcode umfassen zur Steuerung von einem oder mehreren Prozessoren eines oder mehrerer Computer. Der Computerprogrammcode ist auf einem oder mehreren fest oder entfernbar mit den Prozessoren verbundenen (greifbaren) computerlesbaren Speichermedien gespeichert. Der Fachmann wird jedoch verstehen, dass die Funktionsmodule in alternativen Ausführungsvarianten teilweise oder vollständig durch Hardwarekomponenten ausgeführt werden können.

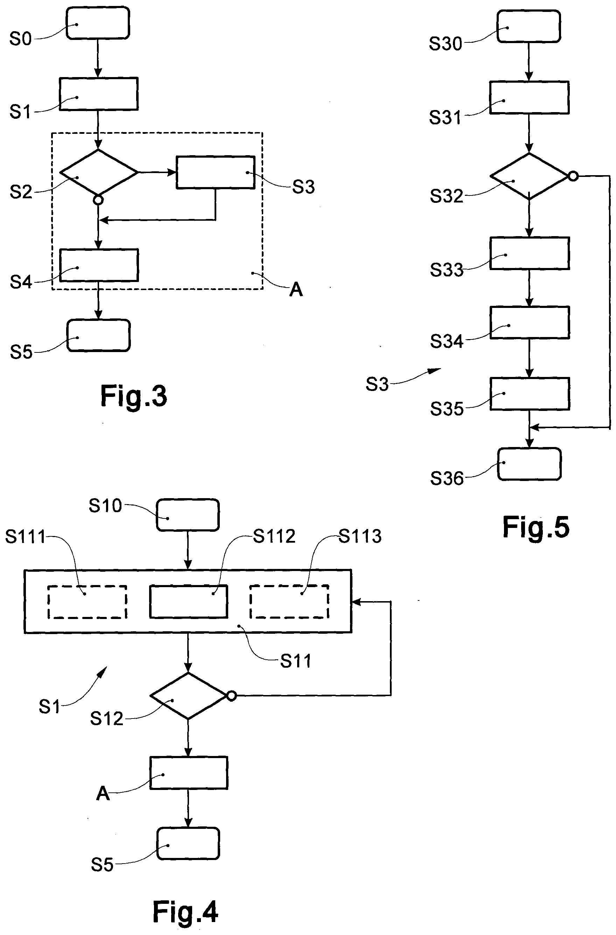

Die verschiedenen Funktionen, für deren Ausführung die Funktionsmodule eingerichtet sind, werden in den folgenden Abschnitten mit Bezug zu den Figuren 3 bis 6 beschrieben, welche Flussdiagramme mit Beispielen von Sequenzen möglicher Schritte für die Steuerung der Produktverarbeitungsanlage 2 mit optimierter Belegung der Zuförderer 23, f1-fF illustrieren.

Wie in der Figur 3 schematisch dargestellt ist, werden im vorbereitenden Schritt S0 vom Produktionsmodul 12 die Produktionskonfigurationsdaten 120 erfasst. Dabei werden die Anlagekonfigurationsparameter über eine Benutzerschnittstelle entgegengenommen und gespeichert und/oder vom Steuercomputer 10 durch aktuelle Betriebs- und Statusdaten der Produktverarbeitungsanlage 2 definiert und/oder aktualisiert, beispielsweise hinsichtlich der Anzahl verfügbarer und betriebsbereiter Anlagemodule wie Zuförderer 23, f1-fF oder Stapelstationen 24. Die produktionsspezifischen Angaben der Produktionskonfigurationen werden beispielsweise als Datei von einem computerisierten Leitsystem empfangen und/oder über eine Benutzerschnittstelle eingegeben respektive angepasst.

Im Schritt S1 werden vom Steuermodul 11 Produktionsoptimierungsparameter erfasst.

Wie in der Figur 4 schematisch dargestellt ist, erzeugt das Steuermodul 11 dazu im Schritt S10 auf einer Anzeige der Steuervorrichtung 1 eine Benutzerschnittstelle, über welche der Benutzer bestimmen kann, ob für die Auslieferungsrouten eine definierte Produktionsreihenfolge einzuhalten ist oder ob die Produktionsreihenfolge der Auslieferungsrouten veränderbar ist. Falls die Produktionsreihenfolge für die gesamte Produktion veränderbar ist, kann der Benutzer einen entsprechenden Sequenzkonsolidierungsparameter durch einfache Selektion eines dafür vorgesehenen Bedienungselements, wie Checkbox oder Radio Button, setzen. Wenn die Produktionsreihenfolge nur für bestimmte Auslieferungsrouten veränderbar ist, setzt der Benutzer Sequenzkonsolidierungsparameter entsprechend für diese Auslieferungsrouten.

Im Schritt S11, nimmt das Steuermodul 11 abhängig vom gesetzten Sequenzkonsolidierungsparameter weitere Produktionsoptimierungsparameter entgegen. Wenn der gesetzte Sequenzkonsolidierungsparameter eine nicht veränderbare Produktionsreihenfolge anzeigt, ist über die Benutzerschnittstelle nur der Splitbetriebparameter im Schritt S112 setzbar, der angibt, ob gleichzeitig mehrere Zuförderer 23, f1-fF mit dem selben Produkt P1-Pn belegt werden können oder nicht. Andernfalls, wenn der gesetzte Sequenzkonsolidierungsparameter eine veränderbare Produktionsreihenfolge anzeigt, sind über die Benutzerschnittstelle in den Schritten S111 respektive S113 überdies der Umsortierungsparameter und der Parallelbeladungsparameter setzbar, um einerseits zu wählen, ob die Reihenfolge der Kollektionssorten umgeordnet werden kann, und andererseits zu bestimmen, ob und gegebenenfalls wie viele parallele Lade- respektive Stapelstationen 24 gleichzeitig zur Verfügung stehen, so dass mehrere Auslieferungsrouten gleichzeitig produziert werden können.

Im Schritt S12, aktiviert das Steuermodul 11 den Optimierungsblock A, wenn der Benutzer die Eingabe der Produktionsoptimierungsparameter über die Schnittstelle beendet hat. Andernfalls, nimmt das Steuermodul 11 im Schritt S11 weitere Produktionsoptimierungsparameter entgegen.

Im Schritt S5 ist der Optimierungsblock A beendet und die optimierte Produktionsreihenfolge gemäss der Figur 8 und/oder die optimierte Belegung der Zuförderer 23, f1-fF gemäss der Figur 9 wird über die Benutzerschnittstelle angezeigt. Dabei werden nicht nur die Markierungslinien C, D mit den Neubelegungen und Unterbrüchen, angezeigt sondern zudem auch erwartete Zeitpunkte und Produktionszeiten, insbesondere ein detaillierter Produktionsfahrplan für sämtliche Produktionssequenzen mit Anfangs- und Endzeiten als absolute und/oder relative Zeitangaben.

Wie in der Figur 3 dargestellt ist, umfasst der Optimierungsblock A des Steuermoduls 11 einen Schritt S2 zur Überprüfung, ob der Sequenzkonsolidierungsparameter eine veränderbare Produktionsreihenfolge anzeigt, einen Schritt S3 zur Optimierung der Produktionsreihenfolge, falls die Produktionsreihenfolge veränderbar ist, und einen Schritt S4 zur Optimierung der Belegung der Zuförderer 23, f1-fF bei definierter (vorgegeben und/oder optimiert) Produktionsreihenfolge.

Die Figur 5 illustriert ein Beispiel einer Sequenz von Schritten S30-S36, die vom Steuermodul 11 zur Optimierung der Produktionsreihenfolge im Schritt S3 ausgeführt werden.

Im Schritt S30 bestimmt das Steuermodul 11 basierend auf der anfänglichen Grundkonfiguration der Produktion, wie beispielsweise in der Figur 7 dargestellt, die Kollektionssorten der verschiedenen Produktionssequenzen s1-sM.

Im Schritt S31 fasst das Steuermodul 11 diejenigen Produktionssequenzen s1-sM zu einer konsolidierten, gemeinsamen Produktionssequenz zusammen, die die selbe Kollektionssorte produzieren und daher die Zuförderung der selben Produkte P1-Pn benötigen. Wie beispielsweise in der Figur 8 ersichtlich ist, umfasst eine zusammengefasst Produktionssequenz s1-sM somit Produktionssequenzen der selben Kollektionssorte, die jedoch für verschiedene Auslieferungsrouten r1-rN produziert werden.

Im Schritt S32 überprüft das Steuermodul 11, ob der Umsortierungsparameter eine veränderbare Reihenfolge der Kollektionssorten anzeigt und fährt gegebenenfalls im Schritt S33 andernfalls im Schritt S36 fort.

Im Schritt S33 bestimmt das Steuermodul 11 für sämtliche Kombinationen von zwei aufeinanderfolgenden Kollektionssorten der Produktion den Aufwand, beispielsweise die Zeitdauer, der beim Wechsel von einer der beiden der Kollektionssorte zur anderen Kollektionssorte durch allfällige Belegungswechsel von Produkten P1-Pn auf den Zuförderern 23, f1-fF entsteht. Dabei weisen Kollektionssorten mit vielen gleichen Produkten P1-Pn einen niedrigen Aufwand, Kollektionssorten mit vielen unterschiedlichen Produkten P1-Pn einen hohen Aufwand auf.

Im Schritt S34 bestimmt das Steuermodul 11 eine Reihenfolge der Kollektionssorten, die einen möglichst geringen Gesamtaufwand (geringe Zeitdauer) mit sich bringt. Die Suche nach der optimalen Reihenfolge entspricht dem bekannten Problem des Handelsreisenden ("Travelling Salesman Problem"), wo die Aufgabe darin besteht, eine Reihenfolge für den Besuch mehrerer Orte so zu wählen, dass die gesamte Reisestrecke des Handlungsreisenden möglichst kurz ist. Der Fachmann wird viele Algorithmen für die Lösung dieses Problems finden, z.B. das Verfahren der nächstliegenden Nachbarn "Nearest Neighbours", welches einen guten Kompromiss zwischen Genauigkeit und Effizienz liefert, oder genetische Algorithmen, welche sehr hohe Genauigkeit aufweisen, dafür aber langsam sind. Für die vorbereitende Optimierung der Sortenreihenfolge vor der eigentlichen Produktion ist ein Verfahren mit hoher Genauigkeit vorzuziehen. Für Optimierung der Sortenreihenfolge während der Produktion ist ein Verfahren mit hoher Geschwindigkeit zu bevorzugen.

Im Schritt S35 speichert das Steuermodul 11 die bestimmte (bevorzugte) Reihenfolge der Kollektionssorten und aktiviert im Schritt S36 die Optimierung der Belegung der Zuförderer 23, f1-fF gemäss Schritt S4.

Die Optimierung der Produktbelegung der Zuförderer 23, f1-fF wird im Schritt S4 abhängig von der Ausführungsvariante nach unterschiedlichen Verfahren ausgeführt. Zum Beispiel werden die Produktionsschritte gemäss einem sogenannten "Greedy Algorithm" sequentiell abgearbeitet und die Produkte P1-Pn nach jedem Produktionsschritt neu den Zufördern 23 zugeordnet, wobei nur die vergangenen Produktionsschritte berücksichtigt. In einer alternativen Variante werden die Produkte P1-Pn fest den Zuförderern 23, f1-fF zugeordnet, wobei Produktionsstopps möglichst vermieden werden. Dazu werden in einem kombinatorischen Ansatz Zuordnungen von Produkten P1-Pn zu Zuförderern 23, f1-fF, die Produktionsunterbrüche verursachen nicht zugelassen, oder es wird in einem so genannten Cliquen Ansatz der Aufwand unterschiedlicher Zuordnungen von Produkten P1-Pn zu Zuförderern 23, f1-fF berechnet und eine Belegung mit möglichst tiefen Gesamtkosten (Aufwand, Zeitdauer, Stillstandszeiten, Rüstzeiten) gewählt.

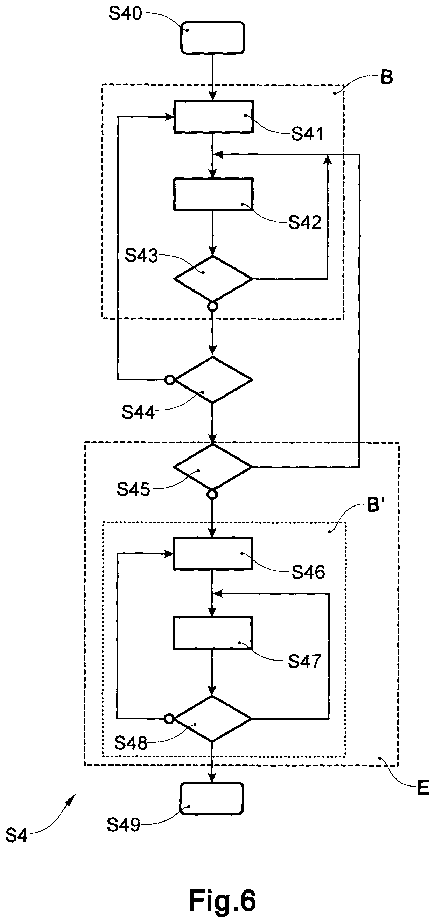

Die Figur 6 illustriert ein Beispiel einer Sequenz von Schritten S40-S49, die vom Steuermodul 11 zur Optimierung der Belegung der Zuförderer 23, f1-fF im Schritt S4 gemäss dem kombinatorischen Ansatz und in einer Variante gemäss dem Cliquen Ansatz ausgeführt werden. Dabei werden abhängig vom gesetzten Splitbetriebparameter und dem Parallelbeladungsparameter die gleichzeitige Belegung von mehreren Zuförderern 23, f1-fF mit dem selbem Produkt P1-Pn respektive die gleichzeitige Produktion von Produktkollektionen für mehrere Auslieferungsrouten zugelassen oder nicht. Weitere Bedingungen, die bei der Belegung der Zuförderer 23, f1-fF mit Produkten P1-Pn einschränkend anwendbar sind umfassen Produktdaten, insbesondere das Produktformat (geometrische Abmessungen, Orientierung), welches abhängig vom Typ der verfügbaren Zuförderer 23, f1-fF die mögliche Belegung eines Zuförderers 23, f1-fF mit einem ungeeigneten Produktformat ausschliesst oder aufgrund von notwendigen Anpassungen des Zuförderers 23, f1-fF während der Produktion mit Aufwand und möglicherweise Produktionsunterbrüchen belastet.

Im Schritt S40 bestimmt das Steuermodul 11 die verschiedenen Produkte P1-Pn, die für die Produktionssequenzen s1-sM respektive Kollektionssorten der Produktion benötigt werden.

Im Schritt S41 selektiert das Steuermodul 11 eines der Produkte P1-Pn für die Zuordnung zu einem der Zuförderer 23, f1-fF. Die Produkte P1-Pn werden beispielsweise nach ihrer Anzahl sortiert und dann in absteigender Reihenfolge selektiert.

Im Schritt S42 selektiert das Steuermodul 11 einen der Zuförderer 23, f1-fF, dem das selektierte Produkt P1-Pn zugeordnet werden soll.

Im Schritt S43 überprüft das Steuermodul 11, ob dem selektierten Zuförderer 23, f1-fF bereits ein Produkt P1-Pn zugeordnet wurde, das in einer gemeinsamen Kollektionssorte vorkommt. Falls dem selektierten Förderer 23 tatsächlich ein Produkt P1-Pn einer gemeinsamen Kollektionssorte zugeordnet wurde, fährt das Steuermodul 11 im Schritt S42 mit der Selektion eines alternativen Zuförderers 23, f1-fF fort. Dadurch wird vermieden, dass Produkte P1-Pn der gleichen Kollektionssorte dem selben Zuförderer 23, f1-fF zugeordnet werden.

Andernfalls überprüft das Steuermodul 11 im Schritt S44, ob dem selektierten Zuförderer 23, f1-fF ein Produkt P1-Pn zugeordnet wurde, das in einer Produktionssequenz verwendet wird, die unmittelbar vor oder nach einer Produktionssequenz ausgeführt wird, in dem das selektierte Produkt P1-Pn verwendet wird. Falls das selektierte und ein bereits dem betreffenden Zuförderer 23, f1-fF zugeordnetes Produkt P1-Pn in unmittelbar aufeinanderfolgenden Produktionssequenzen vorkommen, fährt das Steuermodul 11 im Schritt S45 fort. Andernfalls ordnet das Steuermodul 11 das selektierte Produkt P1-Pn fest dem selektierten Zuförderer 23, f1-fF zu und speichert die Zuordnung in den Belegungsdaten 110 im Belegungsplan.

Im Schritt S45 überprüft das Steuermodul 11, ob noch weitere Zuförderer 23, f1-fF für die Zuordnung des selektierten Produkts P1-Pn selektierbar sind und fährt gegebenenfalls im Schritt S42 mit der Selektion eines alternativen Zuförderers 23, f1-fF fort. Andernfalls wird die Belegungsoptimierung abgebrochen und im Schritt S46 der Optimierungsblock B' ohne die einschränkende Bedingung an aufeinanderfolgende Produktionssequenzen neu gestartet.

Der Optimierungsblock B' entspricht im Wesentlichen dem Block B. Im Schritt S46 selektiert das Steuermodul 11 entsprechend Schritt S41 eines der Produkte P1-Pn für die Zuordnung zu einem der Zuförderer 23, f1-fF.

Im Schritt S47 selektiert das Steuermodul 11 entsprechend dem Schritt S42 einen der Zuförderer 23, f1-fF, dem das selektierte Produkt P1-Pn zugeordnet werden soll.

Im Schritt S48 überprüft das Steuermodul 11 entsprechend Schritt S43, ob dem selektierten Zuförderer 23, f1-fF bereits ein Produkt P1-Pn zugeordnet wurde, das in einer gemeinsamen Kollektionssorte vorkommt. Falls dem selektierten Förderer 23 tatsächlich ein Produkt P1-Pn einer gemeinsamen Kollektionssorte zugeordnet wurde, fährt das Steuermodul 11 im Schritt S47 entsprechend dem Schritt S42 mit der Selektion eines alternativen Zuförderers 23, f1-fF fort.

Andernfalls ordnet das Steuermodul 11 das selektierte Produkt P1-Pn fest dem selektierten Zuförderer 23, f1-fF zu und speichert die Zuordnung in den Belegungsdaten 110 im Belegungsplan.

Im Schritt S49 beendet das Steuermodul 11 die Belegungsoptimierung.

In einer alternativen Ausführungsvariante führt das Steuermodul 11 anstelle des Schritts S45 und des Blocks B' den Optimierungsblock E aus.

Im Optimierungsblock E wird anstelle der einschränkenden Bedingung an aufeinanderfolgende Produktionssequenzen jeweils der Aufwand berechnet, der bei der Zuteilung des selektierten Produkts P1-Pn zum selektierten Zuförderer 23, f1-fF entsteht. Darauf basierend wird eine Belegung der Produkte P1-Pn zu den Zuförderern 23, f1-fF bestimmt, die einen möglichst geringen Gesamtaufwand mit sich bringt (Weighted Clique Cover-Problem). Der Aufwand ergibt sich dabei durch notwendige Neubelegungen von Zuförderern 23, f1-fF und sich daraus ergebende Verzögerungen und Betriebsunterbrüche (Zeitdauer).

Bei einer Änderung der Produktionsbedingungen also bei geänderten Produktionskonfigurationsdaten 120, beispielsweise bei einer detektierten Änderung der Anlagekonfiguration während der Produktion, z.B. aufgrund eines Ausfalls eines Zuförderers 23, f1-fF oder einer Stapelstation 24, bei einer Änderung der Produktionskonfiguration respektive einer dadurch begründeten Änderung der Produktionsoptimierungsparameter, z.B. bei einem Ausfall oder einer Verspätung eines Lastkraftwagens 5 oder bei einer Reduktion des verfügbaren Personals zum Belegen der Zuförderer 23, f1-fF, erfolgt eine neue Ermittlung und Anpassung der Belegung durch die Ausführung einer Belegungsoptimierung während der Produktion, wobei die bereits erstellten Produktkollektionen respektive die noch zu erstellenden Produktkollektionen berücksichtigt werden. Die Belegung der Zuförderer 23, f1-fF wird also bei einer Änderung der Produktionsbedingungen neu ermittelt und optimiert und zwar dynamisch während der laufenden Produktion. Die geänderten Produktionsbedingungen werden beispielsweise vom Produktionsmodul 12 respektive vom Steuercomputer 10 aufgrund aktueller Betriebs- und Statusdaten der Produktverarbeitungsanlage 2 automatisch bestimmt oder über eine Benutzerschnittstelle erfasst.

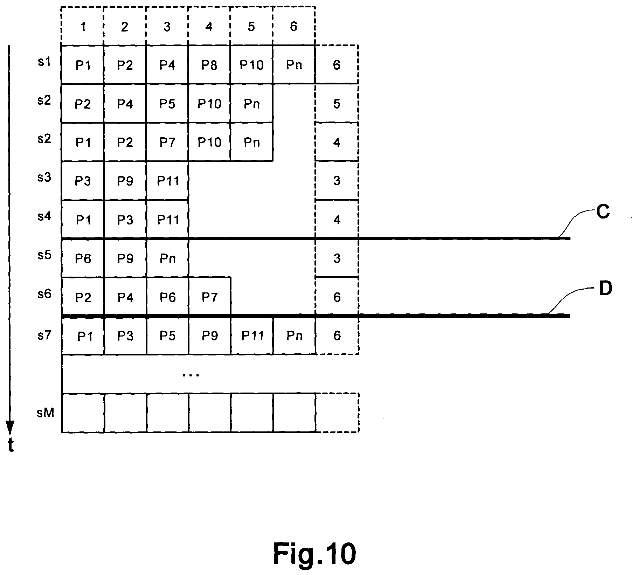

In einer Ausführungsvariante wird über eine Benutzerschnittstelle des Steuercomputers 10 erfasst, ob eine Umstellung der Produktionssequenzen s1-sM zu erfolgen hat. Beispielsweise ist das Produktionsmodul 12 eingerichtet, die Anzahl während einer Produktionssequenz erforderlicher Zuförderer f1-fM darzustellen sowie über die Benutzerschnittstelle eine Umstellung der Produktionssequenzen s1-SM zu erfassen. Das Steuermodul 11 ist entsprechend eingerichtet, die Belegung der Zuförderer f1-fF unter Berücksichtigung der umgestellten Produktionssequenzen zu bestimmen. Figur 10 zeigt eine Darstellung der Anzahl Zuförderer f1-fF, welche während einer Produktionssequenz s1-sM erforderlich sind (im dargestellten Beispiel sind es für die Sequenzen, s1, s2, s3, s4, s5, s6 und s7 6, 5, 4, 3, 4, 3, 6 respektive 6 Zuförderer f1-fF).

Eine Umstellung der Produktionssequenzen s1-sM kann aufgrund einer Beurteilung der auf der Benutzerschnittstelle angezeigten Darstellung der Anzahl belegter Zuförderer f1-fF während einer Produktionssequenz s1-sM erwünscht sein. In Figur 10 sind die Anzahl Zuförderer dargestellt, welche zur Durchführung der gemäss Figur 9 spezifizierten Produktion erforderlich sind. Beispielsweise ist für die Bedienung eines Zuförderers f1-fF jeweils eine Bedienperson erforderlich, für die Bedienung des Wechsels der Belegung eines Zuförderers f1-fF an der Markierungslinie C ist eine zusätzliche Bedienperson erforderlich und für die Bedienung des Betriebsunterbruchs sind zwei zusätzliche Bedienpersonen erforderlich. Gemäss Figur 10 lässt sich somit direkt aus der Darstellung ablesen, wie viele Bedienpersonen für die jeweiligen Produktionssequenzen s1-sM erforderlich sind. Der Einsatzplan für die Anzahl Bedienpersonen kann dementsprechend rasch geplant werden.

Es kann sich als ungünstig herausstellen, dass für die Produktionssequenzen s3, s4, s5 von drei Bedienpersonen auf vier Bedienpersonen und dann wieder auf drei Bedienpersonen gewechselt werden muss. So kann beispielsweise die Produktionssequenz s4 anschliessend an die Produktionssequenz s2 umgestellt werden, wobei anhand der in Figur 9 dargestellten Belegung der Zuförderer f1-fF überprüft wird, ob eine solche Umstellung zulässig ist. Die Überprüfung kann beispielweise manuell erfolgen oder automatisch, beispielsweise durch das Steuermodul 11.

In einer Ausführungsvariante wird die Darstellung der Figur 10 dazu benutzt, um die Produktionsgeschwindigkeit während der einzelnen Produktionssequenzen s1-sM umzustellen. So kann beispielsweise die Produktionssequenz s2 am Abend um 19 Uhr abgeschlossen sein und die Produktion an sich vorbereitet sein, um während einer Nachtschicht von drei oder vier Bedienpersonen weitergeführt zu werden, wobei bei normaler Produktionsgeschwindigkeit die Produktionssequenz s6, welche insgesamt wieder sechs Bedienpersonen erfordert, beispielsweise um 4 Uhr morgens starten würde. Beispielsweise würde jede Produktionssequenz 3 Stunden beanspruchen, d.h. die Produktionssequenz s3 wäre um 22 Uhr abgeschlossen die Produktionssequenz s4 um 1 Uhr und die Produktionssequenz s5 um 4 Uhr. Damit aufgrund der erforderlichen Nachtzuschläge für Bedienpersonen aus Kostengründen während der Nachtschicht die Anzahl Bedienpersonen klein gehalten werden kann, wird die Produktionsgeschwindigkeit beispielsweise bei Beginn der Produktionssequenz s3 um einen Drittel gedrosselt, so dass die Produktionssequenz s3 um 23 Uhr abgeschlossen ist, die Produktionssequenz um 3 Uhr und die Produktionssequenz s5 um 7 Uhr. Somit kann einerseits die Anzahl Bedienpersonen während der Nachtschicht klein gehalten werden, andererseits kann der Zeitpunkt, bei welchem eine grössere Anzahl Bedienpersonen erforderlich ist so verschoben werden, dass kein Nachtschichtzuschlag entrichtet werden muss.

In entsprechender Weise kann gemäss der Darstellung aus Figur 10 einfach abgelesen werden, dass eine zusätzliche Verlangsamung der Produktionsgeschwindigkeit bei der Produktionssequenz s4 dazu führen kann, dass sowohl während der Produktionssequenz s3, der Produktionssequenz s4 (während der ein Wechsel eines Zuförderers f1-fF vorzunehmen ist) und der Produktionssequenz s5 stets dieselbe Anzahl Bedienpersonen erforderlich ist.

Die veränderte Produktionsgeschwindigkeit kann anhand der Figur 10 jeweils durch eine entsprechende zeitliche Streckung (Verbreiterung) der jeweiligen Produktionssequenz s1-sM dargestellt werden, so dass am Zeitstrahl t sofort abgelesen werden kann, zu welchem Zeitpunkt wie viele Bedienpersonen erforderlich sind.

In entsprechender Weise kann aus der Darstellung gemäss der Figur 10 ermittelt werden, zu welchen Zeitpunkten beispielsweise sehr kleine zusätzliche Produktionssequenzen eingeplant werden können. Beispielsweise kann eine Produktionssequenz s3' erforderlich sein, welche gemäss der Produktionssequenz s3 aber zusätzlich mit einem Flyer mit einer Auflage von 2000 Stück herzustellen ist. Eine solche Produktionssequenz könnte beispielsweise anschliessend an die Produktionssequenz s3 gelegt werden, wobei die Produktionsgeschwindigkeit der Produktionssequenz s3' derart reduziert und umgestellt wird, dass keine zusätzlichen Bedienpersonen erforderlich sind und zudem beispielsweise die Produktionssequenz s6 zu einem Zeitpunkt startet, bei welchem für die Bedienpersonen kein Nachtzuschlag entrichtet werden muss.

Backup und Split Anordnungen der Zuförderer können zudem auch einen Einfluss darauf haben, wie viele Mitarbeiter zur Bedienung der Produktionsanlage benötigt werden.

Die Produktionssequenzen s1-sM können statt einen Zeitraum, wie oben beispielhaft dargestellt, von Stunden auch einen Zeitraum von z.B. wenigen Minuten umfassen, je nach der Anzahl Produkte, welche von der Produktionsanlage herzustellen sind.

Abschliessend soll angeführt werden, dass in der Beschreibung zwar Computerprogrammcode spezifischen funktionalen Modulen zugeordnet wurde und dass die Ausführung von Schritten in einer bestimmten Reihenfolge dargestellt wurde, dass der Fachmann jedoch verstehen wird, dass der Computerprogrammcode unterschiedlich strukturiert und die Reihenfolge von mindestens gewissen Schritten geändert werden kann, ohne dabei vom Schutzgegenstand abzuweichen.

## Patentansprüche

1. Eine computerisierte Steuervorrichtung (1) zur Steuerung einer Produktverarbeitungsanlage (2), welche eine Sammelanlage (20) mit einem Förderer (21) und einer Vielzahl von Zuförderern (23, f1-fF) zur Erstellung von Produktkollektionen aus von den Zuförderern (23, f1-fF) zugeführten flächigen Produkten (P1-Pn) verschiedener Art umfasst, die Steuervorrichtung (1) umfassend:
ein Produktionsmodul (12), das eingerichtet ist, eine Produktionskonfiguration (120) zu erfassen, welche eine Produktion von mehreren Produktionssequenzen (s1-sM) für mehrere Auslieferungsrouten definiert, wobei jeder Auslieferungsroute eine oder mehrere Produktionssequenzen (s1-sM) zugeordnet sind, die jeweils eine Produktion von mehreren Produktkollektionen einer mehrere Produkte (P1-Pn) umfassenden Kollektionssorte definieren, und
ein Steuermodul (11), das eingerichtet ist, für die Zuförderer (23, f1-fF) jeweils eine Belegung mit Produkten (P1-Pn) zu bestimmen, die vom Zuförderer (23, f1-fF) zur Erstellung der Produktkollektionen dem Förderer (21) zuzufördern sind, einen Produktionsoptimierungsparameter entgegenzunehmen, der bestimmt, ob für die Auslieferungsrouten eine definierte Produktionsreihenfolge einzuhalten ist oder ob die Produktionsreihenfolge der Auslieferungsrouten veränderbar ist, und bei veränderbarer Produktionsreihenfolge für mehrere Auslieferungsrouten die Produktionssequenzen (s1-sM) für die Produktion von Produktionskollektionen der selben Kollektionssorte zu einer zusammenhängenden Produktionssequenz zusammenzufassen und die Belegung der Zuförderer (23, f1-fF) für die Produktionsreihenfolge mit zusammengefassten Produktionssequenzen zu bestimmen.

2. Die Vorrichtung nach Anspruch 1, **dadurch gekennzeichnet, dass** das Steuermodul (11) eingerichtet ist, Produktionsoptimierungsparameter entgegenzunehmen, die bestimmen, dass für eine oder mehrere der Auslieferungsrouten ein definierter Produktionszeitpunkt einzuhalten ist und/oder dass die Produktionsreihenfolge für die verbleibenden Auslieferungsrouten der Produktion veränderbar ist, und für die veränderbaren Auslieferungsrouten die Produktionssequenzen (s1-sM) für die Produktion von Produktionskollektionen der selben Kollektionssorte zu einer zusammenhängenden Produktionssequenz zusammenzufassen und die Belegung der Zuförderer (23, f1-fF) für die Produktionsreihenfolge mit teilweise unveränderten und teilweise zusammengefassten Produktionssequenzen (s1-sM) zu bestimmen.

3. Die Vorrichtung nach einem der Ansprüche 1 oder 2, **dadurch gekennzeichnet, dass** das Steuermodul (11) eingerichtet ist, eine bei einem Wechsel der Kollektionssorte, von einer zusammengefassten Produktionssequenz zur nachfolgenden zusammengefassten Produktionssequenz, erwartete Zeitdauer für Produktwechsel bei Zuförderern (23, f1-fF) und/oder Produktionsunterbruch der Sammelanlage (20) zu bestimmen, und die Reihenfolge der zusammengefassten Produktionssequenzen so festzulegen, dass die für Produktwechsel und Produktionsunterbruch insgesamt erwartete Zeitdauer möglichst gering ist.

4. Die Vorrichtung nach einem der Ansprüche 1 bis 3, **dadurch gekennzeichnet, dass** das Steuermodul (11) eingerichtet ist, die Belegung der Zuförderer (23, f1-fF) für eine definierte Produktionsreihenfolge so zu bestimmen, dass die Produkte (P1-Pn) jeweils einem der Zuförderer (23, f1-fF) zugeordnet werden, wobei Produkte (P1-Pn), die einer gemeinsamen Kollektionssorte angehören nicht dem selben Zuförderer (23, f1-fF) zugeordnet werden, und Produkte (P1-Pn), die in aufeinanderfolgenden Produktionssequenzen (s1-sM) vorhanden sind, falls möglich, nicht dem selben Zuförderer (23, f1-fF) zugeordnet werden.

5. Die Vorrichtung nach einem der Ansprüche 1 bis 3, **dadurch gekennzeichnet, dass** das Steuermodul (11) eingerichtet ist, die Belegung der Zuförderer (23, f1-fF) für eine festgelegte Produktionsreihenfolge so zu bestimmen, dass die Produkte (P1-Pn) jeweils einem der Zuförderer (23, f1-fF) zugeordnet werden, wobei Produkte (P1-Pn), die einer gemeinsamen Kollektionssorte angehören nicht dem selben Zuförderer (23, f1-fF) zugeordnet werden, für Produkte (23, f1-fF), die in aufeinanderfolgenden Produktionssequenzen (s1-sM) vorhanden sind, eine erwartete Zeitdauer für Produktwechsel bei Zuförderern (23, f1-fF) und/oder Produktionsunterbruch der Sammelanlage (20) zu bestimmen, und die Belegung der Zuförderer (23, f1-fF) so festzulegen, dass die für Produktwechsel und Produktionsunterbruch insgesamt erwartete Zeitdauer möglichst gering ist.

6. Die Vorrichtung nach einem der Ansprüche 1 bis 5, **dadurch gekennzeichnet, dass** das Steuermodul (11) eingerichtet ist, einen Produktionsoptimierungsparameter entgegenzunehmen, der angibt, ob eine gleichzeitige Belegung mehrerer Zuförderer (23, f1-fF) mit dem selben Produkt (P1-Pn) zulässig ist oder nicht, und die Belegung der Zuförderer (23, f1-fF) unter Berücksichtigung der Möglichkeit gleichzeitiger Belegung zu bestimmen.

7. Die Vorrichtung nach einem der Ansprüche 1 bis 6, **dadurch gekennzeichnet, dass** das Steuermodul (11) eingerichtet ist, einen Produktionsoptimierungsparameter entgegenzunehmen, der eine Anzahl Ladestationen bestimmt, welche eine parallele Beladung für mehrere Auslieferungsrouten ermöglichen, und die Belegung der Zuförderer (23, f1-fF) unter Berücksichtigung der Anzahl Ladestationen zu bestimmen.

8. Die Vorrichtung nach einem der Ansprüche 1 bis 7, **dadurch gekennzeichnet, dass** das Produktionsmodul (12) eingerichtet ist, während der Produktion geänderte Produktionsbedingungen zu erfassen, und dass das Steuermodul (11) eingerichtet ist, die Belegung der Zuförderer (23, f1-fF) während der Produktion unter Berücksichtigung der geänderten Produktionsbedingungen zu bestimmen.

9. Die Vorrichtung nach einem der Ansprüche 1 bis 8, **dadurch gekennzeichnet, dass** das Produktionsmodul (12) eingerichtet ist, die Anzahl während einer Produktionssequenz (s1-sM) erforderlichen Zuförderer auf einer Benutzerschnittstelle darzustellen sowie über die Benutzerschnittstelle eine Umstellung der Produktionssequenzen (s1-sM) zu erfassen, und dass das Steuermodul (11) eingerichtet ist, die Belegung der Zuförderer (23, f1-fF) unter Berücksichtigung der umgestellten Produktionssequenzen (s1-sM) zu bestimmen.

10. Computerimplementiertes Verfahren zur Steuerung einer Produktverarbeitungsanlage (2), welche eine Sammelanlage (20) mit einem Förderer (21) und einer Vielzahl von Zuförderern (23, f1-fF) zur Erstellung von Produktkollektionen aus von den Zuförderern (23, f1-fF) zugeführten flächigen Produkten (P1-Pn) verschiedener Art umfasst, umfassend:
Erfassen einer Produktionskonfiguration (120), welche eine Produktion von mehreren Produktionssequenzen (s1-sM) für mehrere Auslieferungsrouten definiert, wobei jeder Auslieferungsroute eine oder mehrere Produktionssequenzen (s1-sM) zugeordnet sind, die jeweils eine Produktion von mehreren Produktkollektionen einer mehrere Produkte (P1-Pn) umfassenden Kollektionssorte definieren,
Bestimmen jeweils für die Zuförderer (23, f1-fF) einer Belegung mit Produkten (P1-Pn), die vom Zuförderer (23, f1-fF) zur Erstellung der Produktkollektionen dem Förderer (21) zuzufördern sind,
Entgegennehmen eines Produktionsoptimierungsparameters, der bestimmt, ob für die Auslieferungsrouten eine definierte Produktionsreihenfolge einzuhalten ist oder ob die Produktionsreihenfolge der Auslieferungsrouten veränderbar ist, bei veränderbarer Produktionsreihenfolge,
Zusammenfassen der Produktionssequenzen (s1-sM) mehrerer Auslieferungsrouten für die Produktion von Produktionskollektionen der selben Kollektionssorte zu einer zusammenhängenden Produktionssequenz, und Bestimmen der Belegung der Zuförderer (23, f1-fF) für die Produktionsreihenfolge mit zusammengefassten Produktionssequenzen.

11. Das Verfahren nach Anspruch 10, **gekennzeichnet durch** Entgegennehmen von Produktionsoptimierungsparametern, die bestimmen, dass für eine oder mehrere der Auslieferungsrouten ein definierter Produktionszeitpunkt einzuhalten ist und/oder dass die Produktionsreihenfolge für die verbleibenden Auslieferungsrouten der Produktion veränderbar ist, Zusammenfassen der Produktionssequenzen (s1-sM) der veränderbaren Auslieferungsrouten für die Produktion von Produktionskollektionen der selben Kollektionssorte zu einer zusammenhängenden Produktionssequenz, und Bestimmen der Belegung der Zuförderer (23, f1-fF) für die Produktionsreihenfolge mit teilweise unveränderten und teilweise zusammengefassten Produktionssequenzen.

12. Das Verfahren nach einem der Ansprüche 10 oder 11, **gekennzeichnet durch** Bestimmen einer bei einem Wechsel der Kollektionssorte, von einer zusammengefassten Produktionssequenz zur nachfolgenden zusammengefassten Produktionssequenz, erwarteten Zeitdauer für Produktwechsel bei Zuförderern (23, f1-fF) und/oder Produktionsunterbruch der Sammelanlage (20), und Festlegen der Reihenfolge der zusammengefassten Produktionssequenzen derart, dass die für Produktwechsel und Produktionsunterbruch insgesamt erwartete Zeitdauer möglichst gering ist.

13. Das Verfahren nach einem der Ansprüche 10 bis 12, **gekennzeichnet durch** Bestimmen der Belegung der Zuförderer (23, f1-fF) für eine definierte Produktionsreihenfolge derart, dass die Produkte (P1-Pn) jeweils einem der Zuförderer (23, f1-fF) zugeordnet werden, wobei Produkte (P1-Pn), die einer gemeinsamen Kollektionssorte angehören nicht dem selben Zuförderer (23, f1-fF) zugeordnet werden, und Produkte (P1-Pn), die in aufeinanderfolgenden Produktionssequenzen vorhanden sind, falls möglich, nicht dem selben Zuförderer (23, f1-fF) zugeordnet werden.

14. Das Verfahren nach einem der Ansprüche 10 bis 13, **gekennzeichnet durch** Bestimmen der Belegung der Zuförderer (23, f1-fF) für eine festgelegte Produktionsreihenfolge derart, dass die Produkte (P1-Pn) jeweils einem der Zuförderer (23, f1-fF) zugeordnet werden, wobei Produkte (P1-Pn), die einer gemeinsamen Kollektionssorte angehören nicht dem selben Zuförderer (23, f1-fF) zugeordnet werden, für Produkte (P1-Pn), die in aufeinanderfolgenden Produktionssequenzen (s1-sM) vorhanden sind, Bestimmen einer erwarteten Zeitdauer für Produktwechsel bei Zuförderern (23, f1-fF) und/oder Produktionsunterbruch der Sammelanlage (20), und Festlegen der Belegung der Zuförderer (23, f1-fF) derart, dass die für Produktwechsel und Produktionsunterbruch insgesamt erwartete Zeitdauer möglichst gering ist.

15. Das Verfahren nach einem der Ansprüche 10 bis 14, **gekennzeichnet durch** Entgegennehmen eines Produktionsoptimierungsparameters, der angibt, ob eine gleichzeitige Belegung mehrerer Zuförderer (23, f1-fF) mit dem selben Produkt (P1-Pn) zulässig ist oder nicht, und Bestimmen der Belegung der Zuförderer (23, f1-fF) unter Berücksichtigung der Möglichkeit gleichzeitiger Belegung.

16. Das Verfahren nach einem der Ansprüche 10 bis 15, **gekennzeichnet durch** Entgegennehmen eines Produktionsoptimierungsparameters, der eine Anzahl Ladestationen bestimmt, welche eine parallele Beladung für mehrere Auslieferungsrouten ermöglichen, und Bestimmen der Belegung der Zuförderer (23, f1-fF) unter Berücksichtigung der Anzahl Ladestationen.

17. Das Verfahren nach einem der Ansprüche 10 bis 16, **gekennzeichnet durch** Erfassen geänderter Produktionsbedingungen während der Produktion, und Bestimmen der Belegung der Zuförderer (23, f1-fF) während der Produktion unter Berücksichtigung der geänderten Produktionsbedingungen.

18. Das Verfahren nach einem der Ansprüche 10 bis 17, **gekennzeichnet durch**: Darstellen der Anzahl erforderlicher Zuförderer auf einer Benutzerschnittstelle, Entgegennehmen von umgestellten Produktionssequenzen (s1-sM), und Bestimmen der Belegung der Zuförderer (23, f1-fF) unter Berücksichtigung der umgestellten Produktionssequenzen (s1-sM).

19. Computerprogrammprodukt, umfassend ein greifbares computerlesbares Speichermedium mit gespeichertem Computercode, welcher eingerichtet ist, einen oder mehrere Prozessoren einer Steuervorrichtung (1) zur Steuerung einer Produktverarbeitungsanlage (2), welche eine Sammelanlage (20) mit einem Förderer (21) und mehreren Zuförderern (23, f1-fF) zur Erstellung von Produktkollektionen aus von den Zuförderern (23, f1-fF) zugeführten flächigen Produkten (P1-Pn) umfasst, so zu steuern, dass die Prozessoren eine Produktionskonfiguration (120) erfassen, welche eine Produktion von mehreren Produktionssequenzen (s1-sM) für mehrere Auslieferungsrouten definiert, wobei jeder Auslieferungsroute eine oder mehrere Produktionssequenzen (s1-sM) zugeordnet sind, die jeweils eine Produktion von mehreren Produktkollektionen einer mehrere Produkte (P1-Pn) umfassenden Kollektionssorte definieren,
jeweils für die Zuförderer (23, f1-fF) eine Belegung mit Produkten (P1-Pn) bestimmen, die vom Zuförderer (23, f1-fF) zur Erstellung der Produktkollektionen dem Förderer (21) zuzufördern sind,
einen Produktionsoptimierungsparameter entgegennehmen, der bestimmt, ob für die Auslieferungsrouten eine definierte Produktionsreihenfolge einzuhalten ist oder ob die Produktionsreihenfolge der Auslieferungsrouten veränderbar ist, bei veränderbarer Produktionsreihenfolge,
die Produktionssequenzen (s1-sM) mehrerer Auslieferungsrouten für die Produktion von Produktionskollektionen der selben Kollektionssorte zu einer zusammenhängenden Produktionssequenz zusammenfassen, und
die Belegung der Zuförderer (23, f1-fF) für die Produktionsreihenfolge mit zusammengefassten Produktionssequenzen bestimmen.

20. Computerprogrammprodukt nach Anspruch 19, **dadurch gekennzeichnet, dass** das Speichermedium weiteren Computercode umfasst, welcher eingerichtet ist, den einen oder die mehreren Prozessoren so zu steuern, dass die Prozessoren das Verfahren gemäss einem der Ansprüche 10 bis 16 ausführen.

## Claims

1. A computerized control device (1) for controlling a product processing system (2) that comprises a collecting system (20) having a conveyor (21) and a plurality of feed conveyors (23, f1-fF) for creating product collections from different types of flat products (P1-Pn) supplied by the feed conveyors (23, f1-fF), the control device (1) comprising:
a production module (12) that is configured for detecting a production configuration (120) that defines a production of multiple production sequences (s1-sM) for multiple delivery routes, wherein one or more production sequences (s1-sM), each of which defines a production of multiple product collections of a collection variety that includes multiple products (P1-Pn), is/are associated with each delivery route, and
a control module (11) that is configured for determining for the feed conveyors (23, f1-fF) in each case an occupancy with products (P1-Pn) that are to be supplied to the conveyor (21) by the feed conveyor (23, f1-fF) for creating the product collections, receiving a production optimization parameter that determines whether a defined production order is to be observed for the delivery routes, or whether the production order of the delivery routes is changeable, and for a changeable production order for multiple delivery routes combining the production sequences (s1-sM) for the production of production collections of the same collection variety into a continuous production sequence and determining the occupancy of the feed conveyors (23, f1-fF) for the production order with combined production sequences.

2. The device according to Claim 1, **characterized in that** the control module (11) is configured for receiving production optimization parameters that determine that, for one or more of the delivery routes, a defined production time is to be observed and/or that the production order for the remaining delivery routes of the production is changeable, and for the changeable delivery routes, combining the production sequences (s1-sM) for the production of production collections of the same collection variety to form a continuous production sequence, and determining the occupancy of the feed conveyors (23, f1-fF) for the production order with partially unchanged and partially combined production sequences (s1-sM).

3. The device according to one of Claims 1 or 2, **characterized in that** the control module (11) is configured for determining, when there is a change in the collection variety from a combined production sequence to the subsequent combined production sequence, an expected time period for a product change for the feed conveyors (23, f1-fF) and/or a production interruption of the collecting system (20), and setting the order of the combined production sequences in such a way that the overall expected time period for the product change and the production interruption is as short as possible.

4. The device according to one of Claims 1 to 3, **characterized in that** the control module (11) is configured for determining the occupancy of the feed conveyors (23, f1-fF) for a defined production order in such a way that the products (P1-Pn) are in each case associated with one of the feed conveyors (23, f1-fF), wherein products (P1-Pn) that belong to a shared collection variety are not associated with the same feed conveyor (23, f1-fF), and if possible, products (P1-Pn) that are present in successive production sequences (s1-sM) are not associated with the same feed conveyor (23, f1-fF).

5. The device according to one of Claims 1 to 3, **characterized in that** the control module (11) is configured for determining the occupancy of the feed conveyors (23, f1-fF) for a set production order in such a way that the products (P1-Pn) are in each case associated with one of the feed conveyors (23, f1-fF), wherein products (P1-Pn) that belong to a shared collection variety are not associated with the same feed conveyor (23, f1-fF), determining for products (23, f1-fF) that are present in successive production sequences (s1-sM) an expected time period for a product change in the feed conveyors (23, f1-fF) and/or a production interruption of the collecting system (20), and setting the occupancy of the feed conveyors (23, f1-fF) in such a way that the overall expected time period for the product change and the production interruption is as short as possible.

6. The device according to one of Claims 1 to 5, **characterized in that** the control module (11) is configured for receiving a production optimization parameter that indicates whether or not a simultaneous occupancy of multiple feed conveyors (23, f1-fF) with the same product (P1-Pn) is allowed, and determining the occupancy of the feed conveyors (23, f1-fF), taking into account the possibility for simultaneous occupancy.

7. The device according to one of Claims 1 to 6, **characterized in that** the control module (11) is configured for receiving a production optimization parameter that determines a number of loading stations that allow parallel loading for multiple delivery routes, and determining the occupancy of the feed conveyors (23, f1-fF), taking into account the number of loading stations.

8. The device according to one of Claims 1 to 7, **characterized in that** the production module (12) is configured for detecting altered production conditions during production, and that the control module (11) is configured for determining the occupancy of the feed conveyors (23, f1-fF) during production, taking into account the altered production conditions.

9. The device according to one of Claims 1 to 8, **characterized in that** the production module (12) is configured for displaying on a user interface the number of feed conveyors required during a production sequence (s1-sM), and for detecting a rearrangement of the production sequences (s1-sM) via the user interface, and that the control module (11) is configured for determining the occupancy of the feed conveyors (23, f1-fF), taking into account the rearranged production sequences (s1-sM).

10. A computer-implemented method for controlling a product processing system (2) that comprises a collecting system (20) having a conveyor (21) and a plurality of feed conveyors (23, f1-fF) for creating product collections from different types of flat products (P1-Pn) that are supplied by the feed conveyors (23, f1-fF), comprising:
detecting a production configuration (120) that defines a production of multiple production sequences (s1-sM) for multiple delivery routes, wherein one or more production sequences (s1-sM), each of which defines a production of multiple product collections of a collection variety that includes multiple products (P1-Pn), is/are associated with each delivery route,
determining for the feed conveyors (23, f1-fF) in each case an occupancy with products (P1-Pn) that are to be supplied to the conveyor (21) by the feed conveyor (23, f1-fF) for creating the product collections,
receiving a production optimization parameter that determines whether a defined production order is to be observed for the delivery routes, or whether the production order of the delivery routes is changeable, and for a changeable production order,
combining the production sequences (s1-sM) of multiple delivery routes for the production of production collections of the same collection variety to form a continuous production sequence, and
determining the occupancy of the feed conveyors (23, f1-fF) for the production order with combined production sequences.

11. The method according to Claim 10, **characterized by** receiving production optimization parameters that determine that a defined production time is to be observed for one or more of the delivery routes, and/or that the production order for the remaining delivery routes of the production is changeable, combining the production sequences (s1-sM) of the changeable delivery routes for the production of production collections of the same collection variety to form a continuous production sequence, and determining the occupancy of the feed conveyors (23, f1-fF) for the production order with partially unchanged and partially combined production sequences.

12. The method according to one of Claims 10 or 11, **characterized by** determining, when there is a change in the collection variety from a combined production sequence to the subsequent combined production sequence, an expected time period for a product change for the feed conveyors (23, f1-fF) and/or a production interruption of the collecting system (20), and setting the order of the combined production sequences in such a way that the overall expected time period for the product change and the production interruption is as short as possible.

13. The method according to one of Claims 10 to 12, **characterized by** determining the occupancy of the feed conveyors (23, f1-fF) for a defined production order in such a way that the products (P1-Pn) in each case are associated with one of the feed conveyors (23, f1-fF), wherein products (P1-Pn) that belong to a shared collection variety are not associated with the same feed conveyor (23, f1-fF), and if possible, products (P1-Pn) that are present in successive production sequences (s1-sM) are not associated with the same feed conveyor (23, f1-fF).

14. The method according to one of Claims 10 to 13, **characterized by** determining the occupancy of the feed conveyors (23, f1-fF) for a set production order in such a way that the products (P1-Pn) in each case are associated with one of the feed conveyors (23, f1-fF), wherein products (P1-Pn) that belong to a shared collection variety are not associated with the same feed conveyor (23, f1-fF), determining for products (23, f1-fF) that are present in successive production sequences (s1-sM) an expected time period for a product change for the feed conveyors (23, f1-fF) and/or a production interruption of the collecting system (20), and setting the occupancy of the feed conveyors (23, f1-fF) in such a way that the overall expected time period for the product change and the production interruption is as short as possible.

15. The method according to one of Claims 10 to 14, **characterized by** receiving a production optimization parameter that indicates whether or not a simultaneous occupancy of multiple feed conveyors (23, f1-fF) with the same product (P1-Pn) is allowed, and determining the occupancy of the feed conveyors (23, f1-fF), taking into account the possibility for simultaneous occupancy.

16. The method according to one of Claims 10 to 15, **characterized by** receiving a production optimization parameter that determines a number of loading stations that allow parallel loading for multiple delivery routes, and determining the occupancy of the feed conveyors (23, f1-fF), taking into account the number of loading stations.

17. The method according to one of Claims 10 to 16, **characterized by** detection of altered production conditions during production, and determining the occupancy of the feed conveyors (23, f1-fF) during production, taking into account the altered production conditions.

18. The method according to one of Claims 10 to 17, **characterized by**: displaying the number of required feed conveyors on a user interface, receiving rearranged production sequences (s1-sM), and determining the occupancy of the feed conveyors (23, f1-fF), taking into account the rearranged production sequences (s1-sM).

19. A computer program product comprising a tangible computer-readable storage medium, with stored computer code that is configured for controlling one or more processors of a control device (1) for controlling a product processing system (2) that comprises a collecting system (20) having a conveyor (21) and multiple feed conveyors (23, f1-fF) for creating product collections from flat products (P1-Pn) supplied by the feed conveyors (23, f1-fF), in such a way that the processors
detect a production configuration (120) that defines a production of multiple production sequences (s1-sM) for multiple delivery routes, wherein one or more production sequences (s1-sM), each of which defines a production of multiple product collections of a collection variety that includes multiple products (P1-Pn), is/are associated with each delivery route,
determine for the feed conveyors (23, f1-fF) in each case an occupancy with products (P1-Pn) that are to be supplied to the conveyor (21) by the feed conveyor (23, f1-fF) for creating the product collections,
receive a production optimization parameter that determines whether a defined production order is to be observed for the delivery routes, or whether the production order of the delivery routes is changeable, and for a changeable production order,
combine the production sequences (s1-sM) of multiple delivery routes for the production of production collections of the same collection variety to form a continuous production sequence, and
determine the occupancy of the feed conveyors (23, f1-fF) for the production order with combined production sequences.

20. The computer program product according to Claim 19, **characterized in that** the storage medium comprises further computer code that is configured for controlling the one or more processors in such a way that the processors execute the method according to one of Claims 10 to 16.

## Revendications

1. Dispositif de commande informatisé (1) destiné à commander un système de traitement de produit (2) qui comprend un système de collecte (20) comportant un convoyeur (21) et une pluralité de convoyeurs d'acheminement (23, f1-fF) pour créer des collections de produits à partir de produits plats (P1-Pn) de différents types acheminés par les convoyeurs d'acheminement (23, f1-fF), le dispositif de commande (1) comprenant :
un module de production (12) qui est adapté pour détecter une configuration de production (120) qui définit une production d'une pluralité de séquences de production (s1-sM) pour plusieurs itinéraires de livraison, au moins une séquence de production (s1-sM) étant associée à chaque itinéraire de livraison, lesquelles séquence de production définissent chacune une production d'une pluralité de collections de produits d'une catégorie de collection comprenant une pluralité de produits (P1-Pn), et
un module de commande (11) qui est adapté pour déterminer pour chacun des convoyeurs d'acheminement (23, f1-fF) une occupation avec des produits (P1-Pn) qui doivent être acheminés au convoyeur (21) par le convoyeur d'acheminement (23, f1-fF) pour créer les collections de produits, recevoir un paramètre d'optimisation de production qui détermine si un ordre de production défini doit être respecté pour les itinéraires de livraison, ou si l'ordre de production des itinéraires de livraison peut être modifié, et combiner, dans le cas d'un ordre de production modifiable pour une pluralité d'itinéraires de livraison les séquences de production (s1-sM) pour la production de collections de la même catégorie de production pour obtenir une séquence de production continue et déterminer l'occupation des convoyeurs d'acheminement (23, f1-fF) pour l'ordre de production avec des séquences de production combinées.

2. Dispositif selon la revendication 1, **caractérisé en ce que** le module de commande (11) est adapté pour recevoir des paramètres d'optimisation de production qui déterminent que, pour au moins un des itinéraires de livraison, un temps de production défini doit être observé et/ou que l'ordre de production pour les itinéraires de livraison restants de la production peut être modifiable, et pour combiner, pour les itinéraires de livraison modifiable, les séquences de production (s1-sM) pour la production de collections de production de la même catégorie de collection afin d'obtenir une séquence de production continue, et pour déterminer l'occupation des convoyeurs d'acheminement (23, f1-fF) pour l'ordre de production avec des séquences de production partiellement inchangées et partiellement combinées (s1-sM).

3. Dispositif selon l'une des revendications 1 ou 2, **caractérisé en ce que** le module de commande (11) est adapté pour déterminer une durée, attendue lors d'un changement de catégorie de collection d'une séquence de production combinée à la séquence de production combinée suivante, pour un changement de produit pour les convoyeurs d'acheminement (23, f1-fF) et/ou une interruption de production du système de collecte (20), et pour définir l'ordre des séquences de production combinées de manière à ce que la durée totale attendue pour le changement de produit et l'interruption de production soit la plus courte possible.

4. Dispositif selon l'une des revendications 1 à 3, **caractérisé en ce que** le module de commande (11) est adapté pour déterminer l'occupation des convoyeurs d'acheminement (23, f1-fF) pour un ordre de production défini de sorte que les produits (P1-Pn) soient chacun associés à l'un des convoyeurs d'acheminement (23, f1-fF), les produits (P1-Pn) qui appartiennent à une catégorie de collection commune n'étant pas associés au même convoyeur d'acheminement (23, f1-fF) et les produits (P1-Pn) qui sont présents dans des séquences de production successives (s1-sM), n'étant si possible pas associés au même convoyeur d'acheminement (23, f1-fF).

5. Dispositif selon l'une des revendications 1 à 3, **caractérisé en ce que** le module de commande (11) est adapté pour déterminer l'occupation des convoyeurs d'acheminement (23, f1-fF) pour un ordre de production défini de telle sorte que les produits (P1-Pn) soient chacun associés à l'un des convoyeurs d'acheminement (23, f1-fF), les produits (P1-Pn) qui appartiennent à une catégorie de collection commune n'étant pas associés au même convoyeur d'acheminement (23, f1-fF), pour déterminer pour les produits (23, f1-fF) qui sont présents dans des séquences de production successives (s1-sM), une durée attendue pour un changement de produit pour les convoyeurs d'acheminement (23, f1-fF) et/ou une interruption de production du système de collecte (20), et pour définir l'occupation des convoyeurs d'acheminement (23, f1-fF) de manière à ce que la durée totale prévue pour le changement de produit et l'interruption de production soit la plus courte possible.

6. Dispositif selon l'une des revendications 1 à 5, **caractérisé en ce que** le module de commande (11) est adapté pour recevoir un paramètre d'optimisation de production qui indique si une occupation simultanée de plusieurs convoyeurs d'acheminement (23, f1-fF) avec le même produit (P1-Pn) est autorisé et pour déterminer l'occupation des convoyeurs d'acheminement (23, f1-fF) avec prise en compte de la possibilité d'occupation simultanée.

7. Dispositif selon l'une des revendications 1 à 6, **caractérisé en ce que** le module de contrôle (11) est adapté pour recevoir un paramètre d'optimisation de production qui détermine un nombre de stations de chargement qui permettent un chargement en parallèle pour plusieurs itinéraires de livraison et pour déterminer l'occupation des convoyeurs d'acheminement (23, f1-fF) avec prise en compte du nombre de stations de chargement.

8. Dispositif selon l'une des revendications 1 à 7, **caractérisé en ce que** le module de production (12) est adapté pour détecter des conditions de production modifiées pendant la production et **en ce que** le module de commande (11) est adapté pour déterminer l'occupation des convoyeurs d'acheminement (23, f1-fF) pendant la production avec prise en compte des conditions de production modifiées.

9. Dispositif selon l'une des revendications 1 à 8, **caractérisé en ce que** le module de production (12) est adapté pour représenter sur une interface utilisateur le nombre de convoyeurs d'acheminement nécessaires lors d'une séquence de production (s1-sM), et pour détecter un réarrangement des séquences de production (s1-sM) via l'interface utilisateur, et **en ce que** le module de commande (11) est adapté pour déterminer l'occupation des convoyeurs d'acheminement (23, f1-fF) avec prise en compte des séquences de production réarrangées (s1-sM).

10. Procédé mise en oeuvre par ordinateur informatique pour commander un système de traitement de produit (2) qui comprend un système de collecte (20) comportant un convoyeur (21) et une pluralité de convoyeurs d'acheminement (23, f1-fF) pour créer des collections de produits à partir de produits plats (P1-Pn) de différents types acheminés par les convoyeurs d'acheminement (23, f1-fF), comprenant :
détecter une configuration de production (120) qui définit une production d'une pluralité de séquences de production (s1-sM) pour plusieurs itinéraires de livraison, au moins une séquence de production (s1-sM) étant associée à chaque itinéraire de livraison, lesquelles séquences de production définissent chacune une production d'une pluralité de collections de produits d'une catégorie de collection comprenant une pluralité de produits (P1-Pn),
déterminer pour chacun des convoyeurs d'acheminement (23, f1-fF) une occupation avec des produits (P1-Pn) qui doivent être acheminés au convoyeur (21) par le convoyeur d'acheminement (23, f1-fF) pour créer les collections de produits,
recevoir un paramètre d'optimisation de production qui détermine si un ordre de production défini doit être respecté pour les itinéraires de livraison, ou si l'ordre de production des itinéraires de livraison peut être modifié, dans le cas d'un ordre de production modifiable,
combiner les séquences de production (s1-sM) d'une pluralité d'itinéraires de livraison pour la production de collections de produits de la même catégorie de collection pour obtenir une séquence de production continue et
déterminer l'occupation des convoyeurs d'acheminement (23, f1-fF) pour l'ordre de production avec des séquences de production combinées.

11. Procédé selon la revendication 10, **caractérisé par** la réception de paramètres d'optimisation de production qui déterminent qu'un instant de production défini doit être respecté pour au moins un des itinéraires de livraison et/ou que l'ordre de production pour les autres itinéraires de livraison de la production est modifiable, par la combinaison des séquences de production (s1-sM) des itinéraires de livraison modifiables pour la production de collections de produits de la même catégorie de collection pour obtenir une séquence de production continue, et par la détermination de l'occupation des convoyeurs d'acheminement (23, f1-fF) pour l'ordre de production avec des séquences de production partiellement inchangées et partiellement combinées.

12. Procédé selon l'une des revendications 10 ou 11, **caractérisé par** la détermination d'une durée, attendue lors d'un changement de catégorie de collection d'une séquence de production combinée à la séquence de production combinée suivante, pour un changement de produit pour les convoyeurs d'acheminement (23, f1-fF) et/ou une interruption de production du système de collecte (20), et par la définition de l'ordre des séquences de production combinées de manière à ce que la durée totale attendue pour le changement de produit et l'interruption de production soit la plus courte possible.

13. Procédé selon l'une des revendications 10 à 12, **caractérisé par** la détermination de l'occupation des convoyeurs d'acheminement (23, f1-fF) pour un ordre de production défini de sorte que les produits (P1-Pn) soient chacun associés à l'un des convoyeurs d'acheminement (23, f1-fF), les produits (P1-Pn) qui appartiennent à une catégorie de collection commune n'étant pas associés au même convoyeur d'acheminement (23, f1-fF) et les produits (P1-Pn) qui sont présents dans des séquences de production successives (s1-sM), n'étant si possible pas associés au même convoyeur d'acheminement (23, f1-fF).

14. Procédé selon l'une des revendications 10 à 13, **caractérisé par** la détermination de l'occupation des convoyeurs d'acheminement (23, f1-fF) pour un ordre de production défini de telle sorte que les produits (P1-Pn) soient chacun associés à l'un des convoyeurs d'acheminement (23, f1-fF), les produits (P1-Pn) qui appartiennent à une catégorie de collection commune n'étant pas associés au même convoyeur d'acheminement (23, f1-fF), par la détermination pour les produits (23, f1-fF) qui sont présents dans des séquences de production successives (s1-sM), d'une durée attendue pour un changement de produit pour les convoyeurs d'acheminement (23, f1-fF) et/ou une interruption de production du système de collecte (20), et par la définition de l'occupation des convoyeurs d'acheminement (23, f1-fF) de manière à ce que la durée totale prévue pour le changement de produit et l'interruption de production soit la plus courte possible.

15. Procédé selon l'une des revendications 10 à 14, **caractérisé par** la réception d'un paramètre d'optimisation de production qui indique si une occupation simultanée de plusieurs convoyeurs d'acheminement (23, f1-fF) avec le même produit (P1-Pn) est autorisé et par la détermination de l'occupation des convoyeurs d'acheminement (23, f1-fF) avec prise en compte de la possibilité d'occupation simultanée.

16. Procédé selon l'une des revendications 10 à 15, **caractérisé par** la réception d'un paramètre d'optimisation de production qui détermine un nombre de stations de chargement qui permettent un chargement en parallèle pour plusieurs itinéraires de livraison et par la détermination de l'occupation des convoyeurs d'acheminement (23, f1-fF) avec prise en compte du nombre de stations de chargement.

17. Procédé selon l'une des revendications 10 à 16, **caractérisé par** la détection de conditions de production modifiées pendant la production et par la détermination de l'occupation des convoyeurs d'acheminement (23, f1-fF) pendant la production avec prise en compte des conditions de production modifiées.

18. Procédé selon l'une des revendications 10 à 17, **caractérisé par** la représentation sur une interface utilisateur du nombre de convoyeurs d'acheminement nécessaires, et par la réception de séquences de production (s1-sM) réarrangées et par la détermination de l'occupation des convoyeurs d'acheminement (23, f1-fF) avec prise en compte des séquences de production réarrangées (s1-sM).

19. Produit de programme d'ordinateur comprenant un support de donnée tangible, lisible par ordinateur, qui comprend un code informatique mémorisé qui est adapté pour commander au moins un processeur d'un dispositif de commande (1) pour commander un système de traitement de produit (2) qui comprend un système de collecte (20) comportant un convoyeur (21) et une pluralité de convoyeurs d'acheminement (23, f1-fF) pour créer des collections de produits à partir de produits plats (P1-Pn) de différents types acheminés par les convoyeurs d'acheminement (23, f1-fF) de sorte que les processeurs
détectent une configuration de production (120) qui définit une production d'une pluralité de séquences de production (s1-sM) pour une pluralité d'itinéraires de livraison, au moins une séquences de production (s1-sM) étant associées à chaque itinéraire de livraison, lesquelles séquences de production définissent chacune une production d'une pluralité de collections de produits d'une catégorie de collection comprenant une pluralité de produits (P1-Pn),
déterminent pour chacun des convoyeurs d'acheminement (23, f1-fF) une occupation avec des produits (P1-Pn) qui doivent être acheminés au convoyeur (21) par le convoyeur d'acheminement (23, f1-fF) pour créer les collections de produits,
reçoivent un paramètre d'optimisation de production qui détermine si un ordre de production défini doit être respecté pour les itinéraires de livraison, ou si l'ordre de production des itinéraires de livraison peut être modifié, dans le cas d'un ordre de production modifiable,
combinent les séquences de production (s1-sM) d'une pluralité d'itinéraire de livraison pour la production de collections de produits de la même catégorie de collection pour obtenir une séquence de production continue, et
déterminent l'occupation des convoyeurs d'acheminement (23, f1-fF) pour l'ordre de production avec des séquences de production combinées.

20. Produit de programme d'ordinateur selon la revendication 19, **caractérisé en ce que** le support de donnée comporte en outre un code informatique qui est adapté pour commander l'au moins un processeur de telle sorte que les processeurs mettent en oeuvre le procédé selon l'une des revendications 10 à 16.
